# EUROPEAN PATENT APPLICATION

(11) **EP 4 641 699 A1**
(43) Date of publication of application: **29.10.2025**
(21) Application number: 23907198.8
(22) Date of filing: 22.12.2023
(51) Int. Cl.: H01M 4/62, H01M 4/13

(54) **BINDER COMPOSITION FOR NON-AQUEOUS SECONDARY BATTERY, SLURRY FOR NON-AQUEOUS SECONDARY BATTERY ELECTRODE, NON-AQUEOUS SECONDARY BATTERY ELECTRODE, AND NON-AQUEOUS SECONDARY BATTERY**

(30) Priority: 22.12.2022 JP 2022205583
(71) Applicant: Resonac Corporation, Tokyo 105-7325 (JP)
(72) Inventor: KAWAHARA, Yuta, Tokyo 105-7325 (JP); IKEHATA, Ryohsuke, Tokyo 105-7325 (JP); HORIKOSHI, Hideo, Tokyo 105-7325 (JP); OKUHARA, Kenta, Tokyo 105-7325 (JP)
(74) Representative: Strehl & Partner mbB
(86) International application number: PCT/JP2023/046198
(87) International publication number: WO 2024/135838

(57) **Abstract**

This binder composition for a non-aqueous secondary battery contains a copolymer and a tackifier, the copolymer has a first structural unit derived from a monomer (a1) and a second structural unit derived from a monomer (a2), the monomer (a1) is a nonionic compound having only one ethylenically unsaturated bond, and the monomer (a2) is a compound having a carboxyl group and having only one ethylenically unsaturated bond.

## Description

### TECHNICAL FIELD

The present invention relates to a binder composition for a non-aqueous secondary battery, a slurry for a non-aqueous secondary battery electrode, a non-aqueous secondary battery electrode, and a non-aqueous secondary battery.

Priority is claimed on Japanese Patent Application No. 2022-205583, filed December 22, 2022, the content of which is incorporated herein by reference.

### BACKGROUND ART

Non-aqueous secondary batteries can be reduced in size and weight and are thus in wide use as power supplies of notebook computers, mobile phones, power tools, electronic and communication equipment, and the like. Recently, non-aqueous secondary batteries have also been in use in power supplies and the like of electric vehicles and hybrid vehicles. A typical example of the non-aqueous secondary battery is a lithium-ion secondary battery.

The non-aqueous secondary battery includes a positive electrode containing a metal oxide or the like as an active material, a negative electrode containing a carbon material, such as graphite, as an active material, and an electrolytic solution. The positive electrode and the negative electrode each include a current collector and an electrode active material layer formed on the current collector. In the electrode active material layer, normally, the molecules of the active material, and the active material and the current collector are bonded to each other, and a binder that fixes the electrode active material layer onto the current collector is contained.

Conventionally, as binders that are used in non-aqueous secondary batteries, binders described in Patent Document 1 and Patent Document 2 are known.

Patent Document 1 describes a binder composition for a secondary battery electrode containing 100 parts by mass of at least one polymer water dispersion selected from the group consisting of a styrene butadiene copolymer latex and an acrylic emulsion and 1 to 20 parts by mass of a nonionic surfactant.

Patent Document 2 describes a binder for a lithium-ion secondary battery electrode having a glass transition temperature of 30°C or lower that is obtained by emulsion polymerization of an ethylenically unsaturated monomer containing 15 to 70 mass% of styrene, an ethylenically unsaturated carboxylic acid ester, an ethylenically unsaturated carboxylic acid, and an internal crosslinker relative to all of the ethylenically unsaturated monomers as essential components in the presence of a surfactant.

Patent Document 3 describes a tire puncture sealant containing an acrylic emulsion, an antifreeze agent, and a tackifier.

Patent Document 4 describes a water-dispersive acrylic pressure-sensitive adhesive tape or sheet for electronic parts transportation provided with a pressure-sensitive adhesive layer composed of an acrylic pressure-sensitive adhesive containing an acrylic emulsion-based polymer as a main component. In addition, Patent Document 4 describes an acrylic emulsion-based polymer that is obtained by emulsion polymerization of an acrylic monomer mixture containing a carboxyl group-containing monomer. **In** addition, Patent Document 4 discloses that the acrylic pressure-sensitive adhesive contains a rosin or terpene-based tackifier having a softening point of 100°C or higher.

Patent Document 5 describes a thermosensitive pressure-sensitive adhesive label having a pressure-sensitive adhesive layer formed of a pressure-sensitive adhesive that is an acrylic emulsion-type polymer. **In** addition, Patent Document 5 discloses that the pressure-sensitive adhesive contains a rosin-based tackifier and/or a petroleum resin-based tackifier.

### Citation List

### Patent Document

Patent Document 1: Japanese Unexamined Patent Application, First Publication No. 2014-239070
Patent Document 2: Japanese Unexamined Patent Application, First Publication No. 2011-243464
Patent Document 3: Japanese Unexamined Patent Application, First Publication No. 2007-224248
Patent Document 4: Japanese Unexamined Patent Application, First Publication No. 2008-285221
Patent Document 5: Japanese Unexamined Patent Application, First Publication No. 2006-82377

### SUMMARY OF INVENTION

### Technical Problem

In recent years, there has been a strong demand for a higher output, a higher capacity, and a longer service life for non-aqueous secondary batteries. Binders that are used in non-aqueous secondary batteries are required to be capable of improving the cycle characteristics of the non-aqueous secondary batteries having an electrode for which the binders are used. However, in the disclosures of Patent Documents 1 to 5, it was not possible to obtain a composition capable of satisfying such a requirement.

The present invention has been made in consideration of the above-described circumstance, and an object of the present invention is to provide a binder composition for a non-aqueous secondary battery and a slurry for a non-aqueous secondary battery electrode that are capable of forming an electrode with which a non-aqueous secondary battery having excellent cycle characteristics can be obtained, a non-aqueous secondary battery electrode with which a non-aqueous secondary battery having excellent cycle characteristics can be obtained, and a non-aqueous secondary battery including the non-aqueous secondary battery electrode.

### Solution to Problem

In order to achieve the above-described object, the present invention includes the following aspects.
[1] A binder composition for a non-aqueous secondary battery containing
   a copolymer and a tackifier,
   in which the copolymer has
   a first structural unit derived from a monomer (a1) and
   a second structural unit derived from a monomer (a2),
   the monomer (a1) is a nonionic compound having only one ethylenically unsaturated bond, and
   the monomer (a2) is a compound having a carboxyl group and having only one ethylenically unsaturated bond.
[2] The binder composition for a non-aqueous secondary battery according to [1], in which the tackifier is at least one selected from a group consisting of a hydrogen-added petroleum resin and a terpene-based resin.
[3] The binder composition for a non-aqueous secondary battery according to [2], in which at least one of the tackifier is the hydrogen-added petroleum resin.
[4] The binder composition for a non-aqueous secondary battery according to [3], in which the hydrogen-added petroleum resin has a softening point of 70°C to 140°C.
[5] The binder composition for a non-aqueous secondary battery according to any one of [1] to [4], in which the amount of the tackifier is 0.10 parts by mass or more and 50 parts by mass or less relative to 100 parts by mass of the copolymer.
[6] The binder composition for a non-aqueous secondary battery according to any one of [1] to [5], in which the amount of the second structural unit in all of the structural units of the copolymer is 0.10 mass% or more and 20 mass% or less.
[7] The binder composition for a non-aqueous secondary battery according to any one of [1] to [6], in which the copolymer has a third structural unit derived from a monomer (a3), and
   the monomer (a3) is a compound having a plurality of independent ethylenically unsaturated bonds.
[8] The binder composition for a non-aqueous secondary battery according to [7], in which the amount of the third structural unit in all of the structural units of the copolymer is 0.010 mass% or more and 10 mass% or less.
[9] The binder composition for a non-aqueous secondary battery according to any one of [1] to [8], in which the first structural unit derived from the monomer (a1) includes a structural unit derived from an aromatic compound, and
   the amount of the structural unit derived from an aromatic compound in all of the structural units of the copolymer is 36 mass% or more.
[10] The binder composition for a non-aqueous secondary battery according to any one of [1] to [9], further containing an aqueous medium.
[11] The binder composition for a non-aqueous secondary battery according to [10], in which the aqueous medium is one selected from the group consisting of water, a hydrophilic solvent, and a mixture containing water and a hydrophilic solvent.
[12] The binder composition for a non-aqueous secondary battery according to [10] or [11], in which the copolymer and the tackifier have been dispersed in the aqueous medium.
[13] The binder composition for a non-aqueous secondary battery according to any one of [1] to [12], in which the copolymer has a glass transition temperature of -10°C to 40°C.
[14] A slurry for a non-aqueous secondary battery electrode containing the binder composition for a non-aqueous secondary battery according to any one of [1] to [13], and an electrode active material.
[15] A non-aqueous secondary battery electrode containing a non-volatile matter of the binder composition for a non-aqueous secondary battery according to any one of [1] to [13].
[16] A non-aqueous secondary battery including the non-aqueous secondary battery electrode according to [15].

### Advantageous Effects of Invention

According to the present invention, it is possible to provide a binder composition for a non-aqueous secondary battery capable of forming an electrode with which a non-aqueous secondary battery having excellent cycle characteristics can be obtained.

Furthermore, according to the present invention, it is possible to provide a slurry for a non-aqueous secondary battery electrode capable of forming an electrode with which a non-aqueous secondary battery having excellent cycle characteristics can be obtained.

**In** addition, according to the present invention, it is possible to provide a non-aqueous secondary battery electrode with which a non-aqueous secondary battery having excellent cycle characteristics can be obtained, and a non-aqueous secondary battery having excellent cycle characteristics that includes the non-aqueous secondary battery electrode.

### BRIEF DESCRIPTION OF DRAWINGS

[FIG. 1] A schematic cross-sectional view representing one example of a non-aqueous secondary battery electrode produced using a binder composition for a non-aqueous secondary battery according to one embodiment of the present invention.
[FIG. 2] A schematic diagram showing one example of the binder composition for a non-aqueous secondary battery according to one embodiment of the present invention.
[FIG. 3] A schematic diagram showing another example of the binder composition for a non-aqueous secondary battery according to one embodiment of the present invention.
[FIG. 4] A schematic diagram showing still another example of the binder composition for a non-aqueous secondary battery according to one embodiment of the present invention.

### DESCRIPTION OF EMBODIMENTS

The present inventors repeated intensive studies to solve the above-described problem and realize a binder capable of forming a non-aqueous secondary battery electrode with which a non-aqueous secondary battery having excellent cycle characteristics can be obtained. As a result, a binder composition for a non-aqueous secondary battery, a slurry for a non-aqueous secondary battery electrode, a non-aqueous secondary battery electrode, and a non-aqueous secondary battery of the present embodiment were obtained.

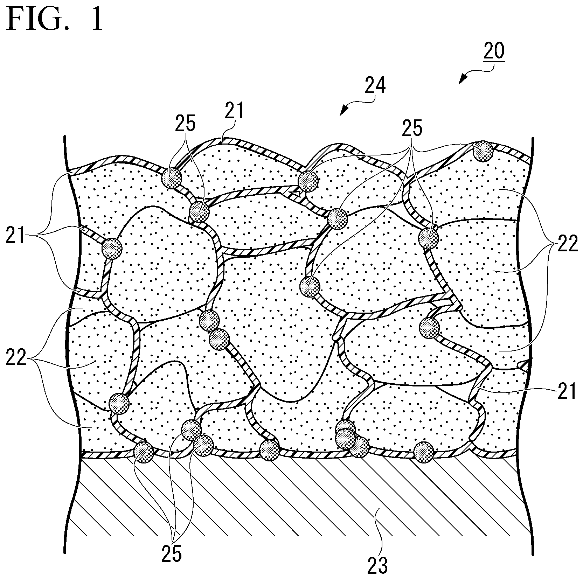

FIG. 1 is a schematic cross-sectional view representing one example of a non-aqueous secondary battery electrode produced using the binder composition for a non-aqueous secondary battery of the present invention.

A non-aqueous secondary battery electrode shown in FIG. 1 (hereinafter referred to as "electrode" in some cases) 20 includes a current collector 23 made of a copper foil or the like and an electrode active material layer 24 formed on the current collector 23. The electrode active material layer 24 of the present embodiment contains an electrode active material 22, a viscosity improver 21, and a binder 25. The binder 25 is composed of a non-volatile matter of the binder composition for a non-aqueous secondary battery of the present embodiment.

The discharge capacity of the non-aqueous secondary battery including the battery 20 decreases as the electrode active material layer 24 of the electrode 20 expands and contracts along with the use of the non-aqueous secondary battery, that is, the expansion and contraction or the like of the electrode active material 22 in association with charge and discharge, and the electrode active material layer 24 peels off from the current collector 23. In addition, the discharge capacity of the non-aqueous secondary battery decreases even when the electrode active material layer 24 does not peel off from the current collector 23 if the binding property between the molecules of the electrode active material 22 and between the electrode active material 22 and the current collector 23 become insufficient along with the expansion and contraction or the like of the electrode active material 22.

Therefore, it is preferable that the binder 25 is capable of maintaining the binding property between the molecules of the electrode active material 22 and between the electrode active material 22 and the current collector 23 for a long period of time and enables the formation of the electrode 20 that does not easily allow the electrode active material layer 24 to peel off from the current collector 23.

Therefore, as a polymer that makes it easy to obtain the electrode active material layer 24 that does not easily peel off from the current collector 23 made of a copper foil or the like, the present inventors paid attention to a copolymer 1 obtained by copolymerizing a monomer (a1) composed of a nonionic compound having only one ethylenically unsaturated bond and a monomer (a2) composed of a compound having a carboxyl group and having only one ethylenically unsaturated bond and repeated intensive studies regarding a binder composition for a non-aqueous secondary battery containing this copolymer.

As a result, a binder composition for a non-aqueous secondary battery containing the copolymer 1 that is obtained by copolymerizing a raw material monomer (a) containing the monomer (a1) and the monomer (a2) and a tackifier 2 was found. In the case of forming an electrode using such a binder composition for a non-aqueous secondary battery of the present embodiment, the binder 25 that is present between the molecules of the electrode active material 22 and between the electrode active material 22 and the current collector 23 contains the copolymer 1 and the tackifier 2. According to this configuration, the electrode has a favorable binding property between the molecules of the electrode active material 22 and between the electrode active material 22 and the current collector 23. As a result, a non-aqueous secondary battery having excellent cycle characteristics and a non-aqueous secondary battery electrode were found.

Furthermore, the present inventors produced the electrode 20 using the binder composition for a non-aqueous secondary battery containing the copolymer 1 and the tackifier 2, confirmed that the cycle characteristics of the non-aqueous secondary battery having this electrode 20 are excellent, and came up with an idea of the electrode 20 of the present embodiment.

Hereinafter, the binder composition for a non-aqueous secondary battery, the slurry for a non-aqueous secondary battery electrode, the non-aqueous secondary battery electrode, the non-aqueous secondary battery, and a method for producing a binder composition for a non-aqueous secondary battery of the present embodiment will be described in detail. The present invention is not limited only to the following embodiment.

Here, the following terms to be used in the present specification will be described.

"(Meta)acrylic" is a collective term of acrylic and methacrylic. "(Meth)acrylate" is a collective term of an acrylate and a methacrylate.

"Ethylenically unsaturated bond" refers to a radical-polymerizable ethylenically unsaturated bond unless particularly otherwise described.

In a polymer for which a compound having an ethylenically unsaturated bond is used, the structural unit derived from the compound having an ethylenically unsaturated bond means a structural unit in which the chemical structure of a part other than the ethylenically unsaturated bond in the compound having an ethylenically unsaturated bond and the chemical structure of a part other than a part corresponding to the ethylenically unsaturated bond of the structural unit in the polymer are the same as each other. The ethylenically unsaturated bond of the compound changes to a single bond at the time of forming the polymer. For example, in a polymer of methyl methacrylate, the structural unit derived from the methyl methacrylate is represented by -CH₂-C(CH₃)(COOCH₃)-.

**In** the case of a polymer of a compound having an ionic functional group and having an ethylenically unsaturated bond, for example, a structural unit having an ionic functional group, such as a carboxylic group, like a second structural unit to be described below is considered as a structural unit derived from the same ionic compound regardless of whether a part of the functional group is ion-exchanged or not. For example, a structural unit represented by -CH₂-C(CH₃)(COONa)- may also be considered as a structural unit derived from methacrylic acid.

In addition, regarding a compound having a plurality of independent ethylenically unsaturated bonds, one or more ethylenically unsaturated bonds may remain in the structural unit as the structural unit of the polymer of the compound. For example, in the case of a polymer of divinyl benzene, a structural unit derived from the divinyl benzene may be a structure having no ethylenically unsaturated bonds (a form in which both parts corresponding to two ethylenically unsaturated bonds of the divinyl benzene have been incorporated into the chain of the polymer) or may be a structure having one ethylenically unsaturated bond (a form in which only a part corresponding to one ethylenically unsaturated bond has been incorporated into the chain of the polymer). Here, the plurality of independent ethylenically unsaturated bonds means a plurality of ethylenically unsaturated bonds that do not form a conjugated diene together.

Furthermore, in a case where, after polymerization, a part other than a chain structure corresponding to the ethylenically unsaturated bond in the polymer, for example, the functional group, such as a carboxy group, does not correspond to the chemical structure of a monomer any longer due to a chemical reaction, the structural unit of the polymer is considered as a structural unit derived from the compound having an ethylenically unsaturated bond in the polymer. For example, in a case where vinyl acetate has been polymerized and then saponified, the structural unit of the polymer is considered not as a structural unit derived from vinyl acetate but as a structural unit derived from a vinyl alcohol in consideration of the chemical structure of the polymer as a criterion.

In the present embodiment, "-s" that is attached to compound names means a group of compounds including the compound structure and also includes the compounds having a substituent.

### 1. Binder composition for a non-aqueous secondary battery

The binder composition for a non-aqueous secondary battery of the present embodiment (hereinafter referred to as "binder composition" in some cases) contains the copolymer 1 having a first structural unit and a second structural unit, which will be described below, and the tackifier 2. The binder composition of the present embodiment may contain an aqueous medium and preferably contains the copolymer 1 and the tackifier 2 dispersed in an aqueous medium to be described below. The binder composition of the present embodiment may be composed of a non-volatile matter containing the copolymer 1 having the first structural unit and the second structural unit and the tackifier 2 without containing the aqueous medium.

The binder composition of the present embodiment may contain a different component together with the copolymer 1 having the first structural unit and the second structural unit and the tackifier 2. Specifically, the binder composition of the present embodiment may contain, for example, a polymer not having the first structural unit and/or the second structural unit, a surfactant, a component used for the synthesis of the copolymer 1, or the like as the different component.

### Copolymer 1

The copolymer 1 that is contained in the binder composition of the present embodiment has at least the first structural unit derived from a monomer (a1) to be shown below and the second structural unit derived from a monomer (a2) to be shown below.

The copolymer 1 that is contained in the binder composition of the present embodiment may include, aside from the first structural unit and the second structural unit, a third structural unit derived from a monomer (a3) composed of a compound having a plurality of independent ethylenically unsaturated bonds that corresponds to neither the monomer (a1) nor the monomer (a2) and/or a fourth structural unit derived from a different monomer (a4) that corresponds to none of the monomer (a1) to the monomer (a3).

### First structural unit

The first structural unit in the copolymer 1 that is contained in the binder composition of the present embodiment is derived from a monomer (a1).

The monomer (a1) is a nonionic compound having only one ethylenically unsaturated bond. That is, the monomer (a1) is a compound having neither an anionic functional group nor a cationic functional group. However, a silane compound is not considered as the monomer (a1). The monomer (a1) may be only one compound or a combination of two or more compounds.

As the monomer (a1), at least one of a (meth)acrylic acid ester and an aromatic compound having an ethylenically unsaturated bond is preferably used, and a combination of both compounds is more preferably used. The (meth)acrylic acid ester is more preferably a (meth)acrylic acid alkyl ester. The number of carbon atoms in the alkyl group in the (meth)acrylic acid alkyl ester is preferably 1 to 20. In this case, a monomer (a1) other than the (meth)acrylic acid alkyl ester and the aromatic compound having an ethylenically unsaturated bond, which will be described below, may be jointly used.

Examples of the (meth)acrylic acid alkyl ester that is contained in the (meth)acrylic acid ester that is used in the monomer (a1) include methyl (meth)acrylate, ethyl (meth)acrylate, n-propyl (meth)acrylate, isopropyl (meth)acrylate, n-butyl (meth)acrylate, tert-butyl (meth)acrylate, cyclohexyl (meth)acrylate, 2-ethylhexyl (meth)acrylate, isobornyl (meth)acrylate, lauryl (meth)acrylate, stearyl (meth)acrylate, and the like. Among these, 2-ethylhexyl (meth)acrylate is preferably contained since the binder composition is capable of forming the electrode active material layer 24 having excellent electrolytic solution resistance.

Examples of the aromatic compound having an ethylenically unsaturated bond that is used in the monomer (a1) include styrene, t-butylstyrene, α-methylstyrene, p-methylstyrene, 1,1-diphenylethylene, and the like. In a case where the monomer (a1) contains an aromatic vinyl compound, at least one of styrene and α-methylstyrene is more preferably contained, and styrene is still more preferably contained since the dispersibility in the aqueous medium is excellent, and a non-aqueous secondary battery including the electrode 20 produced using the binder composition of the present embodiment has superior cycle characteristics.

Examples of the monomer (a1) other than the (meth)acrylic acid alkyl ester and the aromatic compound having an ethylenically unsaturated bond include compounds having an ethylenically unsaturated bond and a polar functional group, aliphatic hydrocarbon compounds having an ethylenically unsaturated bond, and alicyclic hydrocarbon compounds having an ethylenically unsaturated bond, and the like.

As the polar functional group in the compounds having an ethylenically unsaturated bond and a polar functional group that is used in the monomer (a1), at least one of a hydroxy group and a cyano group is preferably contained, and a hydroxy group is more preferably contained.

Examples of the compounds having an ethylenically unsaturated bond and a polar functional group that is used in the monomer (a1) include 2-hydroxyethyl (meth)acrylate, 2-hydroxypropyl (meth)acrylate, (meth)acrylonitrile, and the like, and 2-hydroxyethyl (meth)acrylate is preferably contained since favorable polymerization stability can be obtained at the time of producing the copolymer 1.

### Second structural unit

The second structural unit in the copolymer 1 that is contained in the binder composition of the present embodiment is derived from a monomer (a2).

The monomer (a2) is a compound having only one ethylenically unsaturated bond and having a carboxy group. The monomer (a2) may be only one compound or a combination of two or more compounds.

As the monomer (a2), a compound having a plurality of carboxy groups in one molecule may be used. That is, the copolymer 1 may have a plurality of carboxy groups in one structural unit.

Examples of the monomer (a2) having a carboxy group include unsaturated monocarboxylic acids, such as methacrylic acid, acrylic acid, and crotonic acid; unsaturated dicarboxylic acids, such as itaconic acid and fumaric acid; and the like. Among these, at least one of acrylic acid, methacrylic acid, and itaconic acid is preferably used as the monomer (a2) since the binder composition enables the formation of the electrode 20 having a favorable binding property between the molecules of the electrode active material 22 and between the electrode active material 22 and the current collector 23.

At least a part of the second structural unit derived from the monomer (a2) may be forming a salt with a basic substance. Examples of the monomer (a2) that is forming the salt include metal salts, ammonium salts, and the like of the monomers (a2). Examples of a metal in the metal salts include alkaline metals, such as lithium, sodium, and potassium. Examples of specific compounds include lithium (meth)acrylate, lithium itaconate, dilithium itaconate, sodium (meth)acrylate, sodium itaconate, disodium itaconate, ammonium (meth)acrylate, ammonium itaconate, diammonium itaconate, and the like.

### Third structural unit

The copolymer 1 that is contained in the binder composition of the present embodiment may have a third structural unit as an arbitrary structural unit. The third structural unit is derived from a monomer (a3). The monomer (a3) is a compound having a plurality of independent ethylenically unsaturated bonds. "Being independent" means that the ethylenically unsaturated bond is not such a conjugated double bond as in 1,3-butadiene. Therefore, the monomer (a3) is a compound capable of forming a crosslinked structure in radical polymerization of the monomer (a1) and the monomer (a2). The monomer (a3) does not correspond to any of the monomer (a1) and the monomer (a2). As the monomer (a3), only one compound may be used, or two or more different compounds may be used.

Examples of the monomer (a3) include compounds having two ethylenically unsaturated bonds, such as divinylbenzene, ethylene glycol di(meth)acrylate, 1,6-hexanediol di(meth)acrylate, and 2-hydroxy-3-acryloyloxypropyl methacrylate, compounds having three or more ethylenically unsaturated bonds, such as trimethylolpropane tri(meth)acrylate, and the like. As the monomer (a3), at least one of divinylbenzene and trimethylolpropane triacrylate is preferably used since favorable polymerization stability can be obtained at the time of producing the copolymer 1, and a non-aqueous secondary battery including the electrode 20 produced using the binder composition containing the copolymer 1 has a lower internal resistance and excellent cycle characteristics.

### Different monomer (a4)

The different monomer (a4) is a monomer that does not correspond to any of the monomer (a1) to the monomer (a3). Examples of the different monomer (a4) include compounds having only one ethylenically unsaturated bond and having an anionic functional group other than a carboxy group, such as a sulfo group or a phosphate group, surfactants having an ethylenically unsaturated bond (hereinafter referred to as "polymerizable surfactants" in some cases), compounds having an ethylenically unsaturated bond and having a function as a silane coupling agent, and the like, but the different monomer (a4) is not limited thereto.

Examples of the compounds having only one ethylenically unsaturated bond and having a sulfo group include aromatic vinyl compounds having a sulfo group, aromatic vinyl compounds having a sulfo group that is forming a salt, and the like. Among these, at least one of p-styrenesulfonic acid and p-styrenesulfonate is preferably used, and p-styrenesulfonate is more preferably used. Sodium p-styrenesulfonate is still more preferably used since favorable polymerization stability can be obtained at the time of producing the copolymer 1.

As the polymerizable surfactants, which are one example of the different monomer (a4), it is possible to use a compound having an ethylenically unsaturated bond and having a function as a surfactant.

Examples of the polymerizable surfactants include compounds represented by the following chemical formulae (1) to (4).

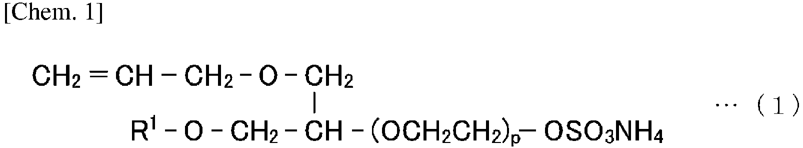

In the formula (1), R¹ is an alkyl group. p is an integer of 10 to 40. R¹ is preferably an alkyl group having 10 to 40 carbon groups and more preferably a linear unsubstituted alkyl group having 10 to 40 carbon groups.

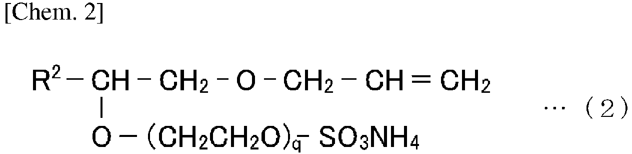

In the formula (2), R² is an alkyl group. q is an integer of 10 to 12. R² is preferably an alkyl group having 10 to 40 carbon groups and more preferably a linear unsubstituted alkyl group having 10 to 40 carbon groups. Examples of the compound represented by the formula (2) include polyoxyethylene alkyl ether sulfuric ester salt (manufactured by DKS Co. Ltd., ACARON KH-10) and the like.

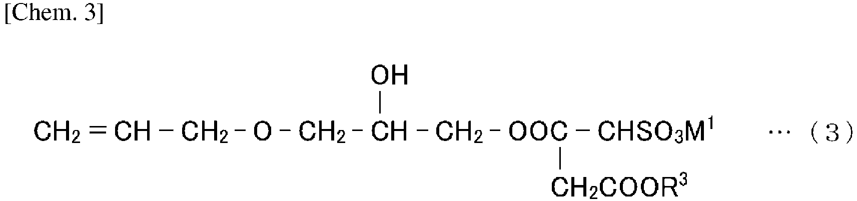

In the formula (3), R³ is an alkyl group. M¹ is NH₄ or Na. R³ is preferably an alkyl group having 10 to 40 carbon groups and more preferably a linear unsubstituted alkyl group having 10 to 40 carbon groups.

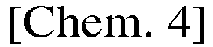

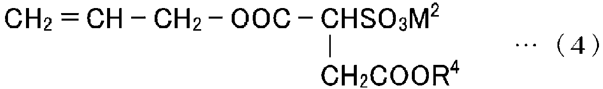

In the formula (4), R⁴ is an alkyl group. M² is NH₄ or Na. R² is preferably an alkyl group having 10 to 40 carbon groups and more preferably a linear unsubstituted alkyl group having 10 to 40 carbon groups.

Examples of the compounds having an ethylenically unsaturated bond and having a function as a silane coupling agent, which are one example of the different monomer (a4), include vinyltrimethoxysilane, γ-methacryloxypropyltrimethoxysilane, vinyltriethoxysilane, γ-methacryloxypropyltriethoxysilane, and the like.

### [Amount of each structural unit in copolymer 1]

The amount of each structural unit in the copolymer 1 that is contained in the binder composition of the present embodiment is regarded as being the same as the amount of each monomer in the total amount of the monomer components used for the production of the copolymer 1.

### [Amount of first structural unit in all structural units]

The amount of the first structural unit in all of the structural units of the copolymer 1 (that is, the amount of the monomer (a1) in the total amount of the monomer components used for the production of the copolymer 1) is preferably 60 mass% or more, more preferably 70 mass% or more, still more preferably 75 mass% or more, and particularly preferably 80 mass% or more. This is because more favorable polymerization stability can be obtained at the time of producing the copolymer 1. The amount of the first structural unit in all of the structural units is preferably 97 mass% or less, more preferably 95 mass% or less, and still more preferably 94 mass% or less. This is because the binder composition enables the formation of the electrode 20 having a favorable binding property between the molecules of the electrode active material 22 and between the electrode active material 22 and the current collector 23.

In the composition of the monomer (a1), the kind and amount of the compound are preferably adjusted as appropriate in order to adjust the glass transition temperature of the copolymer 1 or adjust the polymerization rate in accordance with the molecular design.

Specifically, in a case where the monomer (a1) is an aromatic compound having an ethylenically unsaturated bond, the amount of a structural unit derived from the aromatic compound having an ethylenically unsaturated bond in all of the structural units is preferably 36 mass% or more, more preferably 41 mass% or more, and still more preferably 43 mass% or more. This is because the copolymer 1 has excellent dispersibility in the case of producing a binder composition containing the copolymer 1 dispersed in an aqueous medium. The amount of the structural unit derived from the aromatic compound having an ethylenically unsaturated bond in all of the structural units is preferably 60 mass% or less.

### Amount of second structural unit in all structural units

The amount of the second structural unit in all of the structural units of the copolymer 1 (that is, the amount of the monomer (a2) in the total amount of the monomer components used for the production of the copolymer 1) is preferably 0.10 mass% or more, more preferably 1.0 mass% or more, still more preferably 3.0 mass% or more, far still more preferably 4.0 mass% or more, and particularly preferably 5.0 mass% or more. This is because the binder composition enables the formation of the electrode 20 having a more favorable binding property between the molecules of the electrode active material 22 and between the electrode active material 22 and the current collector 23. The amount of the second structural unit in all of the structural units is preferably 20 mass% or less, more preferably 15 mass% or less, and still more preferably 10 mass% or less. This is because more favorable polymerization stability can be obtained at the time of producing the copolymer 1.

### Amount of third structural unit in all structural units

In a case where the copolymer 1 that is contained in the binder composition of the present embodiment includes the third structural unit, the amount of the third structural unit in all of the structural units of the copolymer 1 (that is, the amount of the monomer (a3) in the total amount of the monomer components used for the production of the copolymer 1) is preferably 0.010 mass% or more, more preferably 0.020 mass% or more, and more preferably 0.030 mass% or more. This is because the effect of the monomer (a3) as an internal crosslinker can be significantly obtained, deterioration of the copolymer 1 is suppressed, and the copolymer 1 can be used as a material for the binder composition with which a non-aqueous secondary battery having superior cycle characteristics can be obtained. The amount of the third structural unit in all of the structural units of the copolymer 1 is preferably 10 mass% or less, more preferably 5.0 mass% or less, still more preferably 1.0 mass% or less, and particularly preferably 0.1 mass% or less. This is because it is possible to suppress gelation of the copolymer 1.

### Amount of fourth structural unit in all structural units

In a case where the copolymer 1 that is contained in the binder composition of the present embodiment includes the fourth structural unit derived from the different monomer (a4), and the different monomer (a4) is a compound having only one ethylenically unsaturated bond and having a sulfo group, the amount of the fourth structural unit in all of the structural units of the copolymer 1 (that is, the amount of the monomer (a4) in the total amount of the monomer components used for the production of the copolymer 1) is preferably 0.10 mass% or more, more preferably 0.20 mass% or more, and still more preferably 0.30 mass% or more. This is because favorable polymerization stability can be obtained at the time of producing the copolymer 1. The amount of the fourth structural unit in all of the structural units of the copolymer 1 is preferably 5.0 mass% or less, more preferably 3.0 mass% or less, and still more preferably 1.0 mass% or less. This is because it is possible to appropriately adjust the particle diameter, viscosity, or the like of the copolymer 1.

In a case where the copolymer 1 of the present embodiment includes the fourth structural unit derived from the different monomer (a4), and the different monomer (a4) is a polymerizable surfactant, the amount of the fourth structural unit in all of the structural units of the copolymer 1 (that is, the amount of the monomer (a4) in the total amount of the monomer components used for the production of the copolymer 1) is preferably 0.01 mass% or more, more preferably 0.05 mass% or more, and still more preferably 0.08 mass% or more. This is because the effect of the polymerizable surfactant contained becomes significant, and favorable polymerization stability can be obtained at the time of producing the copolymer 1. The amount of the fourth structural unit in all of the structural units of the copolymer 1 is preferably 5.0 mass% or less, more preferably 3.0 mass% or less, still more preferably 1.0 mass% or less, and particularly preferably 0.5 mass% or less. This is because it is possible to appropriately adjust the particle diameter, viscosity, or the like of the copolymer 1.

### Glass transition temperature (Tg) of copolymer 1

The glass transition temperature (Tg) of the copolymer 1 that is contained in the binder composition of the present embodiment is the peak top temperature in a DDSC chart that is obtained as the temperature differential of DSC by performing DSC measurement using a differential scanning calorimetry (DSC) device (EXSTAR DSC/SS7020 manufactured by Hitachi High-Tech Corporation) at a heating rate of 10 °C/minute under a nitrogen gas atmosphere.

The glass transition temperature (Tg) of the copolymer 1 is preferably -30°C or higher and more preferably -10°C or higher. This is because a non-aqueous secondary battery including the electrode 20 produced using the binder composition containing the copolymer 1 has excellent cycle characteristics.

The glass transition temperature (Tg) of the copolymer 1 is preferably 100°C or lower, more preferably 50°C or lower, and still more preferably 40°C or lower. This is because the film-forming property of the binder composition improves, and a non-aqueous secondary battery including the electrode 20 produced using the binder composition has superior cycle characteristics.

### Average particle diameter d50 of emulsified particles containing copolymer 1

In a case where the binder composition contains an aqueous medium to be described below, the copolymer 1 that is contained in the binder composition of the present embodiment is preferably in a state of emulsified particles containing the copolymer 1. The average particle diameter d50 of the emulsified particles containing the copolymer 1 that is contained in the binder composition of the present embodiment is preferably 0.18 µm or more and more preferably 0.20 µm or more. This is because when the average particle diameter d50 is 0.18 µm or more, it is possible to form the electrode 20 in which the electrode active material layer 24 is more unlikely to peel off from the current collector 23.

The average particle diameter d50 of the emulsified particles containing the copolymer 1 is preferably 1.0 µm or less, more preferably 0.80 µm or less, still more preferably 0.60 µm or less, and particularly preferably 0.50 µm or less. When the average particle diameter d50 of the emulsified particles containing the copolymer 1 is 1.0 µm or less, in the case of pressing an electrode sheet including the electrode active material layer 24 formed on the current collector 23 to produce the electrode 20 using the binder composition, the electrode sheet can be pressed under suitable pressing conditions. As a result, it is possible to firmly bind the electrode active material 24 with the current collector 23.

The average particle diameter d50 of the emulsified particles containing the copolymer 1 can be adjusted by a well-known method. For example, the average particle diameter can be adjusted with the amount of a surfactant added at the time of producing the copolymer 1 by an emulsification polymerization method, selection of a raw material monomer, or the like. According to the emulsification polymerization method, it is possible to easily produce a binder composition containing the emulsified particles containing the copolymer 1.

### Method for producing copolymer 1

The copolymer 1 that is contained in the binder composition of the present embodiment can be produced by, for example, a method to be described below.

The copolymer 1 can be produced by copolymerizing a raw material monomer containing the monomer (a1) and the monomer (a2) and containing, if necessary, the monomer (a3) composed of a compound having a plurality of independent ethylenically unsaturated bonds and/or the different monomer (a4) (polymerization step). Hereinafter, the monomers that are used to synthesize the copolymer 1 (the components (a1) to (a4)) will be collectively referred to as the raw material monomer (a) in some cases.

Examples of the method for copolymerizing the raw material monomer (a) include an emulsification polymerization method in which the raw material monomer (a) is emulsion-polymerized in an aqueous medium (b). In the case of producing the copolymer 1 by the emulsion polymerization method, it is possible to use, aside from the raw material monomer (a) and the aqueous medium (b), components, such as a non-polymerizable surfactant (c), a basic substance (d), a radical polymerization initiator (e), a chain transfer (f), and the like.

### Aqueous medium (b)

The aqueous medium (b) is one selected from the group consisting of water, a hydrophilic solvent, and a mixture containing water and a hydrophilic solvent. Examples of the hydrophilic solvent include methanol, ethanol, isopropyl alcohol, N-methyl pyrrolidone, and the like. The aqueous medium (b) is preferably water from the viewpoint of polymerization stability. As long as polymerization stability is not impaired, a mixture obtained by adding a hydrophilic solvent to water may be used as the aqueous medium (b).

### Non-polymerizable surfactant (c)

In the case of producing the copolymer 1 by the emulsion polymerization method, the raw material monomer may be emulsion-polymerized by adding a non-polymerizable surfactant (c) to a solution containing the aqueous medium (b) and the raw material monomer (a). The non-polymerizable surfactant (c) refers to, that is, a surfactant (c) having no polymerizable unsaturated bonds in the chemical structure. The surfactant (c) improves the dispersion stability of a solution in the middle of emulsion polymerization and/or a dispersion liquid (emulsion) that is obtained after polymerization. As the surfactant (c), an anionic surfactant or a nonionic surfactant is preferably used.

Examples of the anionic surfactant include alkylbenzene sulfonates, alkyl sulfates, polyoxyethylene alkyl ether sulfuric ester salts, and fatty acid salts.

Examples of the nonionic surfactant include polyoxyethylene alkyl ether, polyoxyethylene alkyl phenyl ether, polyoxyethylene polycyclic phenyl ether, polyoxyalkylene alkyl ether, sorbitan fatty acid ester, and polyoxyethylene sorbitan fatty acid ester.

One of the surfactants (c) may be used alone or two or more thereof may be used in combination.

### Basic substance (d)

In the case of producing the copolymer 1 by the emulsion polymerization method, a basic substance (d) may be added to a solution to be emulsion-polymerized containing the aqueous medium (b) and the raw material monomer (a) and/or a dispersion liquid after emulsion polymerization. Addition of the basic substance (d) neutralizes an acidic component that is contained in the raw material monomer (a). As a result, the pHs of the solution in the middle of emulsion polymerization and/or the dispersion liquid after emulsion polymerization fall into an appropriate range, and the stability of the solution in the middle of emulsion polymerization and/or the dispersion liquid after emulsion polymerization becomes favorable.

Examples of the basic substance (d) that is added to the solution to be emulsion-polymerized and/or the dispersion liquid after emulsion polymerization include ammonia, triethylamine, sodium hydroxide, lithium hydroxide, and the like. One of these basic substances (d) may be used alone or two or more thereof may be used in combination.

### Radical polymerization initiator (e)

The radical polymerization initiator (e) that is used at the time of producing the copolymer 1 by the emulsion polymerization method is not particularly limited, and well-known radical polymerization initiators can be used. Examples of the radical polymerization initiator (e) include persulfates, such as ammonium persulfate and potassium persulfate; hydrogen peroxides; azo compounds; organic peroxides such as tert-butyl hydroperoxide, tert-butyl peroxybenzoate, and cumene hydroperoxide; and the like.

In the present embodiment, at the time of producing the copolymer 1 by the emulsion polymerization method, redox polymerization may be performed by jointly using a reducing agent, such as sodium bisulfite, rongalite, ascorbic acid, together with the radical polymerization initiator (e).

The amount of the radical polymerization initiator (e) added (including the reducing agent in the case of jointly using the reducing agent) is preferably 0.001 parts by mass or more and more preferably 0.002 parts by mass or more relative to 100 parts by mass of the raw material monomer (a). This is because the conversion rate of the raw material monomer (a) into the copolymer 1 can be increased at the time of producing the copolymer 1 by the emulsion polymerization method. The amount of the radical polymerization initiator (e) added is preferably 10 parts by mass or less and more preferably 5 parts by mass or less relative to 100 parts by mass of the raw material monomer (a). This is because the molecular weight of the copolymer 1 can be increased, and it is possible to decrease the swelling rate of the electrode 20 produced using the binder composition of the present embodiment in electrolytic solutions.

### Chain transfer (f)

The chain transfer (f) that is used at the time of producing the copolymer 1 by the emulsion polymerization method is used to adjust the molecular weight of the copolymer 1 that is obtained by emulsion polymerization. Examples of the chain transfer (f) include n-dodecyl mercaptan, tert-dodecyl mercaptan, n-butyl mercaptan, 2-ethylhexyl thioglycolate, 2-mercaptoethanol, β-mercaptopropionic acid, methyl alcohol, n-propyl alcohol, isopropyl alcohol, t-butyl alcohol, benzyl alcohol, and the like.

### Emulsion polymerization method

Examples of the emulsion polymerization method that is used at the time of producing the copolymer 1 include a method in which each component that is used for the emulsion polymerization is emulsion-polymerized while being continuously supplied into a reaction container and the like. The temperature during the emulsion polymerization is not particularly limited but is, for example, 30°C to 90°C, preferably 50°C to 85°C, and more preferably 55°C to 80°C. The emulsion polymerization is preferably performed under stirring. In addition, it is preferable to continuously supply the raw material monomer (a) and the radical polymerization initiator (e) to the solution in the middle of the emulsion polymerization such that the concentrations of the raw material monomer (a) and the radical polymerization initiator (e) in the solution in the middle of the emulsion polymerization become uniform.

In the case of the binder composition of the present embodiment obtained by dispersing the copolymer 1 and the tackifier 2 in an aqueous medium (B) to be described below, since the binder composition can be easily produced compared with a binder composition produced using, for example, an aqueous medium having particles containing a tackifier dispersed in a copolymer or particles obtained by copolymerizing a tackifier together with a raw material monomer, and the degree of freedom of the amount of the tackifier 2 in the binder composition becomes high, it is possible to change the amount of the tackifier 2 as appropriate depending on the application or the like.

### Tackifier

The kind of the tackifier 2 that is contained in the binder composition of the present embodiment is not particularly limited as long as the effect of the present invention is not impaired. One of the tackifier 2 may be used alone or two or more tackifiers may be used in combination.

Examples of the tackifier 2 include natural resins, such as rosin-based resins and terpene-based resins; and petroleum resins, such as hydrogen-added petroleum resins and no-hydrogen-added petroleum resins. The tackifier 2 is preferably at least one selected from a group consisting of rosin-based resins, terpene-based resins and hydrogen-added petroleum resins and more preferably at least one selected from a group consisting of terpene-based resins and hydrogen-added petroleum resins, since the internal resistance of a battery produced using the binder composition is unlikely to become high.

Examples of the rosin-based resins include rosin resins, such as gum rosin, tall oil rosin, and wood rosin; modified rosin resins, such as hydrogenated rosin resin, disproportionated rosin resin, and polymerized rosin resin; rosin ester resins, such as glycerin esters and pentaerythritol esters of these rosin resins and modified rosin resins; and the like. In addition, the rosin-based resins may be an emulsion form obtained by emulsifying the rosin-based resin. Specific examples of commercially available rosin-based resins include HARIESTER DS-70L (manufactured by Harima Chemicals Group, Inc.), which is an emulsion form.

Examples of the terpene-based resins include terpene resins mainly composed of α-pinene, β-pinene, dipentene, or the like, aromatic modified terpene resins, hydrogenated terpene resins, terpene phenol resins, and the like. In addition, the terpene-based resins may be an emulsion form obtained by emulsifying the terpene-based resin. Specific examples of commercially available terpene-based resins include YS RESIN PX800 (manufactured by Yasuhara Chemical Co., Ltd.).

As the petroleum resins, hydrogen-added petroleum resins (hereinafter referred to as "the hydrogenated petroleum resins") may be used or non-hydrogenated petroleum resins may be used. Hydrogenated petroleum resins are preferably used since the internal resistance of a battery produced using the binder composition is unlikely to become high. Examples of the petroleum resins include aliphatic (C5) petroleum resins, aromatic (C9) petroleum resins, copolymer (C5/C9) petroleum resins, dicyclopentadiene-based petroleum resins, alicyclic saturated hydrocarbon resins, and the like, and when at least a part of unsaturated groups is hydrogenated, these resins are hydrogenated petroleum resins. In addition, the petroleum resins may be an emulsion form obtained by emulsifying the petroleum resin. Among these petroleum resins, alicyclic saturated hydrocarbon resins are preferable since the binder composition enables the formation of an electrode having a more favorable binding property between the molecules of an electrode active material and between the electrode active material and a current collector. Specific examples of commercially available alicyclic saturated hydrocarbon resins include ARKON M-90 (manufactured by Arakawa Chemical Industries, Ltd.) and ARKON M-135 (manufactured by Arakawa Chemical Industries, Ltd.).

The softening point of the tackifier 2 is not particularly limited. For example, the softening point of the tackifier 2 is preferably 25°C to 200°C, more preferably 25°C to 175°C, and still more preferably 25°C to 150°C. When the softening point of the tackifier 2 is 25°C or higher, the heat resistance becomes more favorable, and a non-aqueous secondary battery having superior cycle characteristics can be obtained, which is preferable. When the softening point of the tackifier 2 is 200°C or lower, the binder composition enables the formation of an electrode having a more favorable binding property between the molecules of an electrode active material and between the electrode active material and a current collector. As a result, a non-aqueous secondary battery including an electrode for which this binder composition is used develops superior cycle characteristics.

In a case where the tackifier 2 is, for example, a hydrogenated petroleum resin, the softening point of the tackifier 2 is preferably 70°C to 140°C, more preferably 80°C to 140°C, still more preferably 85°C to 135°C, and particularly preferably 90°C to 130°C. When the softening point of the hydrogenated petroleum resin is 70°C or higher, the heat resistance becomes more favorable, and a non-aqueous secondary battery having superior cycle characteristics can be obtained, which is preferable. When the softening point of the hydrogenated petroleum resin is 140°C or lower, the binder composition enables the formation of an electrode having a more favorable binding property between the molecules of an electrode active material and between the electrode active material and a current collector.

The softening point of the tackifier 2 refers to a value that is measured with a ring and bell-type softening point measuring instrument according to JIS K 6220-1:2001.

### Amount of tackifier 2 in binder composition

The amount of the tackifier 2 relative to the amount of the copolymer 1 in the binder composition of the present embodiment is regarded as being the same as the mass of the tackifier 2 relative to the total mass of the monomer components used for the production of the copolymer 1.

The amount of the tackifier 2 is preferably 0.10 parts by mass or more and 50 parts by mass or less, more preferably 0.20 parts by mass or more and 30 parts by mass or less, still more preferably 0.30 parts by mass or more and 15 parts by mass or less, and particularly preferably 1.0 part by mass or more and 8.0 parts by mass or less relative to 100 parts by mass of the copolymer 1 that is contained in the binder composition of the present embodiment (that is, the monomer components used for the production of the copolymer 1).

When the amount of the tackifier 2 is 0.10 parts by mass or more, the effect of the tackifier 2 that is contained in the binder composition becomes significant. As a result, the binder composition enables the formation of the electrode 20 having a more favorable binding property between the molecules of the electrode active material 22 and between the electrode active material 22 and the current collector 23. From the above-described viewpoint, the amount of the tackifier 2 is more preferably 0.20 parts by mass or more, still more preferably 0.30 parts by mass or more, and particularly preferably 1.0 part by mass or more.

In addition, when the amount of the tackifier 2 is 50 parts by mass or less, the amount of the copolymer 1 in the binder composition can be sufficiently secured, and a non-aqueous secondary battery including the electrode 20 containing the binder 25 composed of a non-volatile matter of the binder composition has a lower internal resistance. From the above-described viewpoint, the amount of the tackifier 2 is more preferably 30 parts by mass or less, still more preferably 15 parts by mass or less, and particularly preferably 8.0 parts by mass or less.

As one form, the binder composition of the present embodiment contains the copolymer 1, the tackifier 2, and an aqueous medium (B). The binder composition may be a composition obtained by dispersing each of the copolymer 1 and the tackifier 2 in the aqueous medium (B), that is, a dispersion liquid.

### Aqueous medium (B)

The aqueous medium (B) is the same as the aqueous medium described in the aqueous medium (b) used for the synthesis of the copolymer 1. The aqueous medium (B) may be the same as or different from the aqueous medium (b) used for the synthesis of the copolymer 1.

In a case where the binder composition of the present embodiment has emulsified particles obtained by producing the copolymer 1 by the emulsion polymerization method, the aqueous medium (B) may be the aqueous medium (b) used for the synthesis of the copolymer 1. In addition, the aqueous medium (B) may be a medium obtained by adding a new aqueous medium to the aqueous medium (b) used for the synthesis of the copolymer 1. In addition, the aqueous medium (B) may be a medium obtained by replacing a part or all of the aqueous medium (b) that is contained in a dispersion liquid obtained by producing the copolymer 1 by the emulsion polymerization method with a new aqueous medium. The new aqueous medium that is used in this case may be the same composition as or a different composition from the aqueous medium (b) used for the synthesis of the copolymer 1.

The binder composition of the present embodiment may contain a well-known additive as appropriate to an extent that the effect of the present invention is not impaired.

### Non-volatile matter concentration of binder composition

The binder 25 that is contained in the electrode 20 produced using the binder composition of the present embodiment is composed of a component that does not volatilize but remains even when a step accompanying heating is performed in a method for producing a non-aqueous secondary battery to be described below (non-volatile matter). Specifically, the component that forms the binder 25 is a component that remains after 1 g of the binder composition is weighed, placed on an aluminum dish having a diameter of 5 cm, put into a dryer, and dried at one atmosphere (1013 hPa) at a temperature of 105°C for one hour while the air in the dryer is circulated.

The non-volatile matter concentration of the binder composition of the present embodiment is preferably 20 mass% or more, more preferably 25 mass% or more, and still more preferably 30 mass% or more. This is because a sufficiently large amount of an effective component is made to be contained in the binder composition. The non-volatile matter concentration of the binder composition can be adjusted with the amount of the aqueous medium (B) that is contained in the binder composition.

The non-volatile matter concentration of the binder composition is preferably 80 mass% or less, more preferably 70 mass% or less, and still more preferably 60 mass% or less. This is because an increase in the viscosity of the binder composition is suppressed, and it becomes easy to fabricate a slurry for a non-aqueous secondary battery electrode.

The total amount of the copolymer 1 and the tackifier that are contained in the non-volatile matter of the binder composition of the present embodiment is preferably 80 mass% or more, more preferably 90 mass% or more, still more preferably 95 mass% or more, and still more preferably 98 mass% or more. This is because the effect of the copolymer 1 and the tackifier 2 that are contained in the binder composition becomes significant.

The total amount of the copolymer 1 and the tackifier that are contained in the non-volatile matter of the binder composition of the present embodiment may be 100 mass% or less.

### 2. Method for producing binder composition for non-aqueous secondary battery

Next, a method for producing the binder composition of the present embodiment will be described. One embodiment of the method for producing the binder composition includes a mixing step of mixing the copolymer 1 and the above-described tackifier 2. Furthermore, the method may further include a polymerization step of synthesizing the above-described copolymer 1. The method for producing the binder composition of the present embodiment preferably includes a polymerization step of synthesizing the above-described copolymer 1 and a mixing step of mixing the resultant copolymer 1 and the above-described tackifier 2.

In the mixing step of the present embodiment, a method for mixing the copolymer 1 and the tackifier 2 is not particularly limited, and a well-known method can be used. Examples of the method for mixing the copolymer 1 and the tackifier 2 include methods in which a stirring-type, rotation-type, shaking-type, or other mixing device is used.

In the case of producing a binder composition containing the copolymer 1 and the tackifier 2 each dispersed in the aqueous medium (B) as the binder composition of the present embodiment, it is possible to use, for example, a method in which a dispersion liquid obtained by producing the copolymer 1 by the emulsion polymerization method, the tackifier 2, and the aqueous medium (B), which may be added if necessary, are mixed together, a method in which the copolymer 1 obtained by a method other than the emulsion polymerization method, the tackifier 2, and the aqueous medium (B) are mixed together, or the like.

In the case of using the copolymer 1 obtained by a method other than the emulsion polymerization method as the copolymer 1, as a method for dispersing the copolymer 1 in the aqueous medium (B), it is possible to use a well-known method, such as a method in which a surfactant is used. Examples of the surfactant include the same ones as the surfactants provided as exemplary examples of the non-polymerizable surfactant (c) that can be used at the time of producing the copolymer 1 by the emulsion polymerization method.

In addition, a method for dispersing the tackifier 2 in the aqueous medium (B) is not particularly limited. The tackifier 2 may be dispersed using a surfactant.

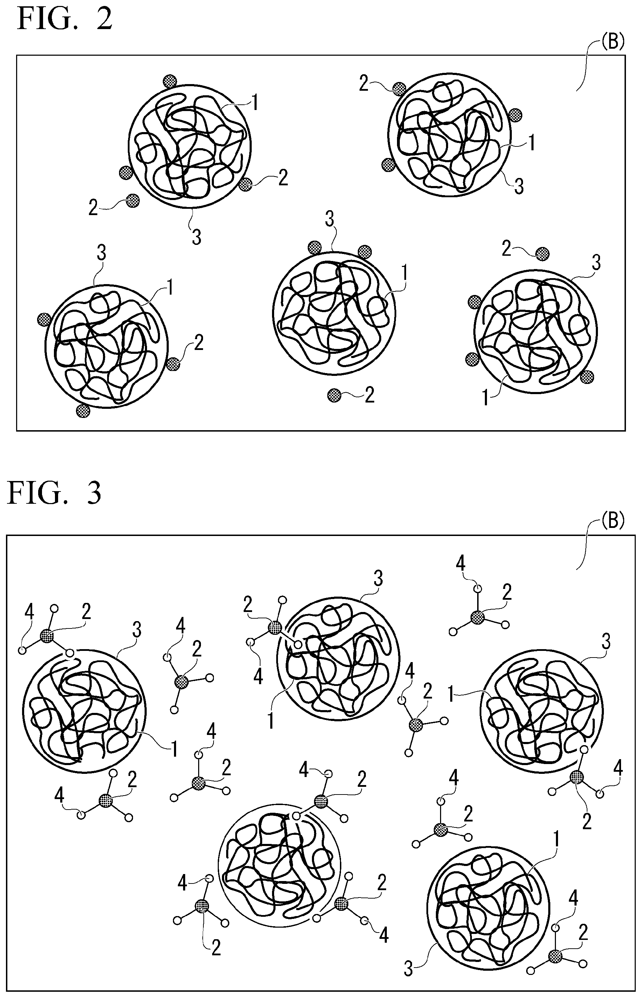

Here, an example of a conceivable form of the binder composition of the present embodiment will be described with reference to FIG. 2, FIG. 3, and FIG. 4. However, the form of the binder composition of the present embodiment is not limited to the example to be described below.

FIG. 2 is a schematic diagram showing one example of the binder composition of the present embodiment. A binder composition shown in FIG. 2 contains emulsified particles containing the copolymer 1 (dispersed particles) 3, the tackifier 2, and the aqueous medium (B). In the binder composition shown in FIG. 2, the emulsified particles 3 containing the copolymer 1 and the tackifier 2 have been each dispersed in the aqueous medium (B). The tackifier 2 may or may not have a particulate shape.

The copolymer 1 shown in FIG. 2 has a random coil-like polymer chain, that is, a particulate structure composed of chain molecules (massive structure) as one form that the present inventors assume. The emulsified particles 3 containing the copolymer 1 shown in FIG. 2 are a soap-free emulsion containing no surfactants and have been dispersed in the aqueous medium (B). The emulsified particles 3 containing the copolymer 1 can be produced by the above-described emulsion polymerization method. The tackifier 2 shown in FIG. 2 may be present near the emulsified particles 3 or in a state of being in contact with the emulsified particles 3 as one form that the present inventors assume.

FIG. 3 is a schematic diagram showing another example of the binder composition of the present embodiment. In the binder composition of the present embodiment, for example, as shown in FIG. 3, emulsified particles containing the tackifier 2 and a surfactant 4 may be present in the aqueous medium (B). The emulsified particles containing the tackifier 2 and the surfactant 4 may be present near the emulsified particles 3 or in a state of being in contact with the emulsified particles 3.

The binder composition shown in FIG. 3 can be produced by mixing the emulsified particles containing the tackifier 2 and the surfactant 4, the copolymer 1, and the aqueous medium (B). The emulsified particles containing the tackifier 2 and the surfactant 4 are easy to handle compared with the tackifier 2 alone and have excellent dispersibility in the aqueous medium (B) due to repulsion between the emulsified particles.

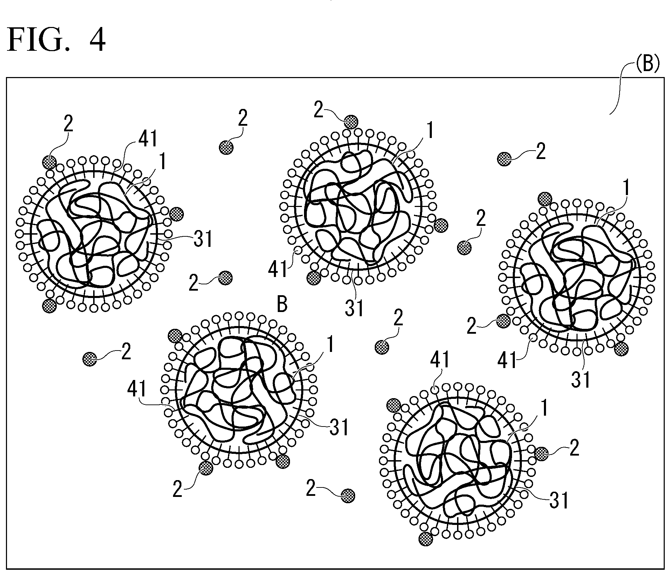

FIG. 4 is a schematic diagram showing still another example of the binder composition of the present embodiment. In the binder composition of the present embodiment, as shown in FIG. 4, an emulsified particle 31 may be a particle in which the copolymer 1 has been surrounded with a surfactant 41 having hydrophilic groups facing outwards. The surfactant 41 does not correspond to the raw material monomer (a) containing a polymerizable surfactant as the different monomer (a4), which is used at the time of producing the copolymer 1, and is derived from the non-polymerizable surfactant (c).

The tackifier 2 shown in FIG. 4 may be present near the emulsified particles 31 or in a state of being in contact with the emulsified particles 31 (surfactant 41) as one form that the present inventors assume. In addition, in a case where the binder composition shown in FIG. 4 contains the surfactant 41 that is excessively present and has thus been isolated in the aqueous medium (B) at the time of producing the emulsified particles 31, the tackifier 2 may be present as emulsified particles containing the surfactant 41. In the binder composition shown in FIG. 4, the emulsified particles 31 has favorable dispersibility in the aqueous medium and is thus easy to handle. In addition, since the dispersibility of the emulsified particles 31 is favorable, the distribution of the binder in an electrode active material layer becomes uniform, and an electrode has a more favorable binding property between the molecules of an electrode active material and between the electrode active material and a current collector.

In the case of forming an electrode using the binder composition according to the present embodiment, it is conceivable that the binder containing the copolymer 1 and the tackifier 2 is present between the molecules of an electrode active material and between the electrode active material and a current collector as shown in, for example, FIG. 2 to FIG. 4. Therefore, in the case of forming an electrode using the binder composition according to the present embodiment, the electrode has a favorable binding property between the molecules of an electrode active material and between the electrode active material and a current collector. As a result, a non-aqueous secondary battery having excellent cycle characteristics and a non-aqueous secondary battery electrode can be obtained.

### 3. Slurry for non-aqueous secondary battery electrode

Next, a slurry for a non-aqueous secondary battery electrode of the present embodiment will be described in detail. The slurry for a non-aqueous secondary battery electrode contains a binder composition containing the copolymer 1, the tackifier 2, and the aqueous medium (B) and an electrode active material. The electrode active material that is contained in the slurry for a non-aqueous secondary battery electrode preferably has been dispersed in the aqueous medium. The slurry for a non-aqueous secondary battery electrode may contain, aside from the copolymer 1, the tackifier 2, the electrode active material, and the aqueous medium, an additive, such as a viscosity improver or a conductive aid, the above-described component used for the production of the binder composition, or the like.

### Total amount of copolymer 1 and tackifier 2

The total amount of the copolymer 1 and the tackifier 2 that are contained in the slurry for a non-aqueous secondary battery electrode is preferably 0.50 parts by mass or more and more preferably 1.0 part by mass or more relative to 100 parts by mass of the electrode active material. This is because the effect of the binder composition of the present embodiment contained is sufficiently developed.

The total amount of the copolymer 1 and the tackifier 2 that are contained in the slurry for a non-aqueous secondary battery electrode is preferably 5.0 parts by mass or less, more preferably 4.0 parts by mass or less, and still more preferably 3.0 parts by mass or less relative to 100 parts by mass of the electrode active material. This is because it is possible to increase the amount of the electrode active material that is contained in the slurry for a non-aqueous secondary battery electrode.

### Electrode active material

The electrode active material that is contained in the slurry for a non-aqueous secondary battery electrode is a material capable of intercalating and deintercalating ions that serve as charge carriers, such as lithium ions. The ions that serve as charge carriers are preferably alkali metal ions, more preferably lithium ions, sodium ions, or potassium ions, and still more preferably lithium ions.

In a case where a non-aqueous secondary battery electrode that is produced using the slurry for a non-aqueous secondary battery electrode is a negative electrode, the electrode active material is a negative electrode active material. As the negative electrode active material, at least one of a carbon material, a silicon-containing material, and a titanium-containing material is preferably contained. Examples of the carbon material that is used as the negative electrode active material include cokes, such as petroleum coke, pitch coke, and coal coke, carbonides of an organic polymer, and graphites, such as artificial graphite and natural graphite. Examples of the silicon-containing material that is used as the negative electrode active material include silicon and silicon compounds, such as silicon oxides. Examples of the titanium-containing material that is used as the negative electrode active material include lithium titanate and the like. These materials that are used as the negative electrode active material may be used singly or may be mixed or complexed together and used.

The negative electrode active material preferably contains at least one of the carbon material and the silicon-containing material and more preferably contains the carbon material. This is because the effect of the copolymer 1 and the tackifier 2 that are contained in the slurry for a non-aqueous secondary battery electrode that improve the binding property between the molecules of the negative electrode active material 22 and between the negative electrode active material 22 and the current collector 23 becomes large.

In a case where a non-aqueous secondary battery electrode that is produced using the slurry for a non-aqueous secondary battery electrode is a positive electrode, the electrode active material is a positive electrode active material. As the positive electrode active material, a substance having a higher standard electrode potential than negative electrode active materials is used. Examples of the positive electrode active material include lithium composite oxides containing nickel, such as Ni-Co-Mn-based lithium composite oxides, Ni-Mn-Al-based lithium composite oxides, and Ni-Co-Al-based lithium composite oxides, lithium cobalt oxide (LiCoO₂), spinel-type lithium manganese oxide (LiMn₂O₄), olivine-type lithium iron phosphate, chalcogen compounds, such as TiS₂, MnO₂, MoO₃, and V₂O₅, and the like. One of these substances that are used as the positive electrode active material may be used alone or two or more thereof may be used in combination.

### Aqueous medium

The aqueous medium that is contained in the slurry for a non-aqueous secondary battery electrode of the present embodiment is the same as that described as the aqueous medium (b) used for the synthesis of the copolymer 1. The aqueous medium may be the same as or different from the aqueous medium (b) used for the synthesis of the copolymer 1.

The aqueous medium that is contained in the slurry for a non-aqueous secondary battery electrode of the present embodiment may be only the aqueous medium (B) that is contained in the binder composition. In addition, the aqueous medium may be an aqueous medium obtained by adding a new aqueous medium to the aqueous medium (B) that is contained in the binder composition. In addition, a part or all of the aqueous medium (B) that is contained in the binder composition may be replaced with a new aqueous medium. In the slurry for a non-aqueous secondary battery electrode of the present embodiment, an additive may be used as appropriate. Examples thereof include materials provided as exemplary examples below.

### Viscosity improver

Examples of a viscosity improver that may be contained in the slurry for a non-aqueous secondary battery electrode include celluloses, such as carboxymethyl cellulose (CMC), hydroxyethyl cellulose, and hydroxypropyl cellulose, ammonium salts of celluloses, alkali metal salts of celluloses, polyvinyl alcohol, polyvinylpyrrolidone, and the like. The viscosity improver preferably contains at least one of carboxymethylcellulose, an ammonium salt of carboxymethylcellulose, and an alkali metal salt of carboxymethylcellulose. This is because dispersion of the electrode active material in the slurry for a non-aqueous secondary battery electrode becomes easy.

The amount of the viscosity improver that is contained in the slurry for a non-aqueous secondary battery electrode is preferably 0.50 parts by mass or more and more preferably 0.80 parts by mass or more relative to 100 parts by mass of the electrode active material. This is because the binding property between the molecules of the electrode active material 22 and between the electrode active material 22 and the current collector 23 that are contained in a non-aqueous secondary battery electrode fabricated using the slurry for a non-aqueous secondary battery electrode becomes favorable.

The amount of the viscosity improver that is contained in the slurry for a non-aqueous secondary battery electrode is preferably 3.0 parts by mass or less, more preferably 2.0 parts by mass or less, and still more preferably 1.5 parts by mass or more relative to 100 parts by mass of the electrode active material. This is because the coatability of the slurry for a non-aqueous secondary battery electrode becomes favorable.

### Conductive aid

Examples of a conductive aid that may be contained in the slurry for a non-aqueous secondary battery electrode of the present embodiment include carbon blacks, carbon fibers, and the like. Examples of the carbon blacks include furnace black, acetylene black, DENKA BLACK (registered trademark) (manufactured by Denka Company Limited), KETJENBLACK (registered trademark) (manufactured by Ketjenblack International Co., Ltd.), and the like. Examples of the carbon fibers include carbon nanotubes, carbon nanofibers, and the like. Preferable examples of the carbon nanotubes include VGCF (registered trademark, manufactured by Showa Denko K.K.), which is a vapor-grown carbon fiber.

### Method for producing slurry for a non-aqueous secondary battery electrode

Examples of a method for producing the slurry for a non-aqueous secondary battery electrode of the present embodiment include a method in which the binder composition containing the copolymer 1 and the tackifier 2 dispersed in the aqueous medium (B), the electrode active material, the viscosity improver that is contained if necessary, the conductive aid that is contained if necessary, and other components that are contained if necessary are mixed together. The order of mixing the individual components that are the raw materials of the slurry for a non-aqueous secondary battery electrode is not particularly limited and can be determined as appropriate. Examples of a method for mixing the individual components include methods in which a stirring-type, rotation-type, shaking-type, or other mixing device is used.

### 4. Non-aqueous secondary battery electrode

Next, a non-aqueous secondary battery electrode of the present embodiment will be described in detail. The electrode 20 of the present embodiment contains a non-volatile matter of the binder composition of the present embodiment. The electrode 20 of the present embodiment includes the current collector 23 and the electrode active material layer 24 formed on the current collector 23 as shown in FIG. 1. Examples of the shape of the electrode 20 of the present embodiment include laminates, wound bodies, and the like and are not particularly limited.

The range of the electrode active material layer 24 formed on the current collector 23 is not particularly limited. The electrode active material layer 24 may be formed on the entire surface of the current collector 23 or the electrode active material layer 24 may be formed on only a part of the surface of the current collector 23. In a case where the current collector 23 has a shape of a plate, a foil, or the like, the electrode active material layer 24 may be formed on both surfaces or only one surface of the current collector 23.

### Current collector

The current collector 23 is preferably a metal sheet having a thickness of 0.001 mm or more and 0.5 mm or less. Examples of the metal that forms the metal sheet include iron, copper, aluminum, nickel, stainless steel, and the like. In a case where the electrode 20 of the present embodiment is a negative electrode of a lithium-ion secondary battery, the current collector 23 is preferably a copper foil.

### Electrode active material layer

The electrode active material layer 24 contains the binder 25, which is a non-volatile matter of the binder composition of the present embodiment, and the electrode active material 22. The electrode active material layer 24 may contain a conductive aid, the viscosity improver 21, or the like. As any of the electrode active material 22, the conductive aid, and the viscosity improver 21, the same ones as provided as exemplary examples of the components of the slurry for a non-aqueous secondary battery electrode can be used.

### Method for producing non-aqueous secondary battery electrode

The electrode 20 of the present embodiment can be produced by, for example, a method to be described below. First, the slurry for a non-aqueous secondary battery electrode of the present embodiment is applied onto the current collector 23. Subsequently, the slurry for a non-aqueous secondary battery electrode is dried. This forms the electrode active material layer 24 containing the binder 25, which is a non-volatile matter of the binder composition of the present embodiment, on the current collector 23 and produces an electrode sheet. After that, the electrode sheet is cut into an appropriate size if necessary. The electrode 20 of the present embodiment can be obtained by performing the above-described step.

A method for applying the slurry for a non-aqueous secondary battery electrode onto the current collector 23 is not particularly limited, and examples thereof include a reverse roll method, a direct roll method, a doctor blade method, a knife method, an extrusion method, a curtain method, a gravure method, a bar method, a dip method, a squeeze method, and the like. Among these application methods, any method selected from a direct roll method, a doctor blade method, a knife method, or an extrusion method is preferably used when a variety of properties, such as viscosity, and drying property of the slurry for a non-aqueous secondary battery electrode are taken into account. This is because it is possible to obtain the electrode active material layer 24 having a smooth surface and a small variation in thickness.

In the case of applying the slurry for a non-aqueous secondary battery electrode to both surfaces of the current collector 23, the slurry may be sequentially applied to one surface and then to the other surface or may be simultaneously applied to both surfaces. In addition, the slurry for a non-aqueous secondary battery electrode may be applied onto the current collector 23 continuously or intermittently.

The amount of the slurry for a non-aqueous secondary battery electrode applied can be determined depending on the designed capacity of a battery, the composition of the slurry for a non-aqueous secondary battery electrode, or the like.

A method for drying the slurry for a non-aqueous secondary battery electrode applied onto the current collector 23 is not particularly limited, and it is possible to use methods selected from hot air, reduced pressure or vacuum environment, (far) infrared rays, and low temperature air singly or in combination.

The drying temperature and the drying time at the time of drying the slurry for a non-aqueous secondary battery electrode can be adjusted as appropriate depending on the non-volatile matter concentration in the slurry for a non-aqueous secondary battery electrode, the amount of the slurry applied to the current collector 23, or the like. The drying temperature is preferably 40°C or higher and 350°C or lower and more preferably 60°C or higher and 100°C or lower from the viewpoint of the productivity. The drying time is preferably one minute or longer and 30 minutes or shorter.

The electrode sheet including the electrode active material layer 24 formed on the current collector 23 may be cut to have appropriate size and shape as the electrode 20. A method for cutting the electrode sheet is not particularly limited, and for example, a slit, a laser, a wire cut, a cutter, a thomson, or the like can be used.

In the present embodiment, before or after the cutting of the electrode sheet, the electrode sheet may be pressed if necessary. This makes it possible to more firmly bind the electrode active material 22 to the current collector 23 and makes the thickness of the electrode 20 thin, which makes it possible to reduce the size of the non-aqueous secondary battery.

As a method for pressing the electrode sheet, an ordinary method can be used. As the pressing method, in particular, a die pressing method or a roll pressing method is preferably used.

In the case of using the die pressing method, the press pressure is not particularly limited but is preferably 0.5 t/cm² or higher and 5 t/cm² or lower.

In the case of using the roll pressing method, the press load is not particularly limited but is preferably 0.5 t/cm or more and 8 t/cm or lower. This is because a decrease in the intercalation and deintercalation capacity of charge carriers, such as lithium ions, into and from the electrode active material 22 can be suppressed while the above-described pressing effect can be obtained.

### 5. Non-aqueous secondary battery

Next, as a preferable example of a non-aqueous secondary battery according to the present embodiment, a lithium-ion secondary battery will be described. The configuration of a non-aqueous secondary battery of the present invention is not limited to an example to be described below.

The lithium-ion secondary battery of the present embodiment includes well-known parts, such as a positive electrode, a negative electrode, an electrolytic solution, and a separator that is provided if necessary, stored in an exterior body.

The shape of the lithium-ion secondary battery may be any shape of a coin shape, a button shape, a sheet shape, a cylindrical shape, a square shape, and a flat shape.

### Positive electrode and negative electrode

In the lithium-ion secondary battery of the present embodiment, one or both of the positive electrode and the negative electrode include the electrode active material layer 24 containing the binder 25, which is a non-volatile matter of the binder composition of the present embodiment. In the lithium-ion secondary battery of the present embodiment, it is preferable that between the positive electrode and the negative electrode, at least the negative electrode includes the electrode active material layer 24 containing the binder 25, which is a non-volatile matter of the binder composition.

In a case where, in the lithium-ion secondary battery of the present embodiment, only one electrode of the positive electrode and the negative electrode includes the electrode active material layer 24 containing the non-volatile matter of the binder composition of the present embodiment, an electrode produced using a well-known binder, such as polyvinylidene fluoride, instead of the binder composition of the present embodiment is included as an electrode not containing the non-volatile matter of the binder composition of the present embodiment.

### Electrolytic solution

As the electrolytic solution, a non-aqueous liquid having ion conductivity is used. Examples of the electrolytic solution include a solution containing an electrolyte dissolved in an organic solvent and an ionic liquid, and the former is preferable. This is because the production cost is low, and a lithium-ion secondary battery having a low internal resistance can be obtained.

As the electrolyte, alkali metal salts can be used, and the electrolyte can be selected as appropriate depending on the kind or the like of the electrode active material. Examples of the electrolyte include LiClO₄, LiBF₆, LiPF₆, LiCF₃SO₃, LiCF₃CO₂, LiAsF₆, LiSbF₆, LiB₁₀Cl₁₀, LiAlCl₄, LiCl, LiBr, LiB(C₂H₅)₄, CF₃SO₃Li, CH₃SO₃Li, LiCF₃SO₃, LiC₄F₉SO₃, Li(CF₃SO₂)₂N, aliphatic lithium carboxylates, and the like. In addition, other alkali metal salts can also be used as the electrolyte.

The organic solvent that dissolves the electrolyte is not particularly limited, and examples thereof include carbonate compounds such as ethylene carbonate (EC), propylene carbonate (PC), diethyl carbonate (DEC), ethyl methyl carbonate (EMC), dimethyl carbonate (DMC), fluoroethylene carbonate (FEC), and vinylene carbonate (VC); nitrile compounds such as acetonitrile; and carboxylates such as ethyl acetate, propyl acetate, methyl propionate, ethyl propionate, and propyl propionate. One of these organic solvents may be used alone or two or more thereof may be used in combination. Among these, organic solvents combined with a linear carbonate solvent are preferably used as the organic solvent.

### Exterior body

As the exterior body, for example, an exterior body formed of an aluminum-laminated material composed of an aluminum foil and a resin film or the like can be used as appropriate, but the exterior body is not limited thereto.

### Examples

Hereinafter, the present invention will be specifically described with examples and comparative examples. The examples to be described below are intended for easier understanding of the contents of the present invention. The present invention is not limited only to these examples.

In the following examples, negative electrodes of lithium-ion secondary batteries were fabricated as examples of the non-aqueous secondary battery electrode of the present invention, lithium-ion secondary batteries were fabricated as examples of the non-aqueous secondary battery, and the effect of the present invention was confirmed by comparison with negative electrodes of lithium-ion secondary batteries and lithium-ion secondary batteries according to the comparative examples.

In addition, unless particularly otherwise described, water that was used in the following examples and comparative examples is ion-exchanged water.

### 1. Production of binder composition for non-aqueous secondary battery Example 1 to Example 6

A raw material monomer (a) shown in Table 1 and Table 2 was mixed in a mass ratio shown in Table 1 and Table 2 with 200 parts by mass of water as an aqueous medium (b) and emulsified, thereby fabricating a monomer emulsified liquid. Next, an aqueous solution containing a radical polymerization initiator (e) shown in Table 1 and Table 2 in the amount shown in Table 1 and Table 2 dissolved in 50 parts by mass of water was fabricated.

150 Parts by mass of water was put into a separable flask having a cooling tube, a thermometer, a stirrer, and a dripping funnel and heated to 75°C. The monomer emulsified liquid and the aqueous solution containing the radical polymerization initiator (e) dissolved therein were continuously supplied to this separable flask for three hours while being stirred at 75°C and thereby emulsion-polymerized, thereby obtaining an emulsion.

The resultant emulsion was cooled to room temperature. After that, 132 parts by mass of water and 25 mass% of ammonia water (17 parts by mass of ammonia and 51 parts by mass of water) in the amount shown in Table 1 and Table 2 were added to the emulsion. As a result, an emulsion containing emulsified particles containing a copolymer 1 of each of Example 1 to Example 6 dispersed in water was obtained.

The emulsion containing the emulsified particles containing the copolymer of each of Example 1 to Example 6 dispersed in water and a tackifier shown in Table 1 and Table 2 were mixed together in a mass ratio shown in Table 1 and Table 2 using a homodisperser to produce a binder composition for a non-aqueous secondary battery of each of Example 1 to Example 6 containing the copolymer, the tackifier, and water.

In the binder composition for a non-aqueous secondary battery of each of Example 1 to Example 6, anomalous dispersion, such as the agglomeration of the emulsified particles containing the copolymer and the tackifier in the composition, was not observed, and the dispersion was maintained.

### Comparative Example 1

An emulsion containing only the emulsified particles containing a copolymer produced in Example 1 dispersed in water was used as a binder composition for a non-aqueous secondary battery of Comparative Example 1.

**[Table 1A]**

| | Component | | Compound name | Example 1 | | Example 2 | |
|---|---|---|---|---|---|---|---|
| | | | | | 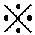 1 | | 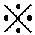 1 |
| | Raw material monomer (a) | Monomer (a1) | Styrene | 188 | 48.6% | 188 | 48.6% |
| | | | 2-Ethylhexyl acrylate | 164 | 42.4% | 164 | 42.4% |
| | | | 2-Hydroxyethyl methacrylate | 7.5 | 1.9% | 7.5 | 1.9% |
| | | Monomer (a2) | Acrylic acid | 15 | 3.9% | 15 | 3.9% |
| | | | Itaconic acid | 8.0 | 2.1% | 8.0 | 2.1% |
| | | Monomer (a3) | Divinylbenzene | 0.2 | 0.05% | 0.2 | 0.05% |
| | | Monomer (a4) | Sodium p-styrenesulfonate | 2.5 | 0.6% | 2.5 | 0.6% |
| Amounts of components used for fabrication of binder composition (parts by mass) | | | Polyoxyethylene alkyl ether sulfuric ester salt | 1.7 | 0.4% | 1.7 | 0.4% |
| | Radical polymerization initiator (e) | | Potassium persulfate | 1.0 | | 1.0 | |
| | | | Rongalite SFS | 0.6 | | 0.6 | |
| | Basic substance (d) | | Ammonia | 17 | | 17 | |
| | Aqueous medium (b) | | Water | 583 | | 583 | |
| | | | ARKON M-90 | 10.0 | 2.58 | | |
| | | | alicyclic saturated hydrocarbon resin | | | | |
| | | | ARKON M-135 | | | 10.0 | 2.58 |
| | | | alicyclic saturated hydrocarbon resin | | | | |
| | Tackifier | | YS RESIN PX800 | | | | |
| | | | polyterpene resin | | | | |
| | | | EMULSION HARIESTER DS-70L | | | | |
| | | | rosin ester resin | | | | |
| | | | EMULSION AM-1000-NT | | | | |
| | | | alicyclic saturated hydrocarbon resin | | | | |
| Evaluation | Tackifier | | Softening point | 90 | | 135 | |
| | Binder composition | | Non-volatile matter concentration (mass%) | 40 | | 40 | |
| | Copolymer | | Glass transition temperature (°C) | 15 | | 15 | |
| | | | Particle diameter (d50) (µm) | 0.27 | | 0.27 | |
| | Battery | | Internal resistance (DCR) (Ω) | 26 | | 26 | |
| | | | Discharge capacity retention after 500 cycles (%) | 81 | | 81 | |

| | | | | | | | |
|---|---|---|---|---|---|---|---|
| 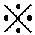 1: The numerical values in the right columns for the raw material monomers (a) are the content rates (mass%) of individual monomers in a case where the total amount of the raw material monomer (a) is set to 100 parts by mass. The numerical values in the right columns for the tackifiers are the numbers of parts by mass of the tackifiers in a case where the copolymer is set to 100 parts by mass. | | | | | | | |

**[Table 1B]**

| | Component | | Compound name | Example 3 | | Example 4 | |
|---|---|---|---|---|---|---|---|
| | | | | | 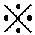 1 | | 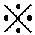 1 |
| | Raw material monomer (a) | Monomer (a1) | Styrene | 188 | 48.6% | 188 | 48.6% |
| | | | 2-Ethylhexyl acrylate | 164 | 42.4% | 164 | 42.4% |
| | | | 2-Hydroxyethyl methacrylate | 7.5 | 1.9% | 7.5 | 1.9% |
| | | Monomer (a2) | Acrylic acid | 15 | 3.9% | 15 | 3.9% |
| | | | Itaconic acid | 8.0 | 2.1% | 8.0 | 2.1% |
| | | Monomer (a3) | Divinylbenzene | 0.2 | 0.05% | 0.2 | 0.05% |
| | | Monomer (a4) | Sodium p-styrenesulfonate | 2.5 | 0.6% | 2.5 | 0.6% |
| | | | Polyoxyethylene alkyl ether sulfuric ester salt | 1.7 | 0.4% | 1.7 | 0.4% |
| Amounts of components used for fabrication of binder composition (parts by mass) | Radical polymerization initiator (e) | | Potassium persulfate | 1.0 | | 1.0 | |
| | | | Rongalite SFS | 0.6 | | 0.6 | |
| | Basic substance (d) | | Ammonia | 17 | | 17 | |
| | Aqueous medium (b) | | Water | 583 | | 583 | |
| | | | ARKON M-90 | | | | |
| | | | alicyclic saturated hydrocarbon resin | | | | |
| | | | ARKON M-135 | | | | |
| | Tackifier | | alicyclic saturated hydrocarbon resin | | | | |
| | | | YS RESIN PX800 | 10.00 | 2.58 | | |
| | | | polyterpene resin | | | | |
| | | | EMULSION HARIESTER DS-70L | | | 10.0 | 2.58 |
| | | | rosin ester resin | | | | |
| | | | EMULSION AM-1000-NT | | | | |
| | | | alicyclic saturated hydrocarbon resin | | | | |
| Evaluation | Tackifier | | Softening point | 80 | | 70 | |
| | Binder composition | | Non-volatile matter concentration (mass%) | 40 | | 40 | |
| | Copolymer | | Glass transition temperature (°C) | 15 | | 15 | |
| | | | Particle diameter (d50) (µm) | 0.27 | | 0.27 | |
| | Battery | | Internal resistance (DCR) (Ω) | 26 | | 26 | |
| | | | Discharge capacity retention after 500 cycles (%) | 80 | | 80 | |

| | | | | | | | |
|---|---|---|---|---|---|---|---|
| 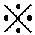 1: The numerical values in the right columns for the raw material monomers (a) are the content rates (mass%) of individual monomers in a case where the total amount of the raw material monomer (a) is set to 100 parts by mass. The numerical values in the right columns for the tackifiers are the numbers of parts by mass of the tackifiers in a case where the copolymer is set to 100 parts by mass. | | | | | | | |

**[Table 2]**

| | Component | | Compound name | Example 5 | | Example 6 | | Comparative Example 1 | |
|---|---|---|---|---|---|---|---|---|---|
| | | | | | 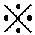 1 | | 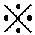 1 | | 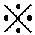 1 |
| | Raw material monomer (a) | Monomer (a1) | Styrene | 188 | 48.6% | 188 | 48.6% | 188 | 48.6% |
| | | | 2-Ethylhexyl acrylate | 164 | 42.4% | 164 | 42.4% | 164 | 42.4% |
| | | | 2-Hydroxyethyl methacrylate | 7.5 | 1.9% | 7.5 | 1.9% | 7.5 | 1.9% |
| | | Monomer (a2) | Acrylic acid | 15 | 3.9% | 15 | 3.9% | 15 | 3.9% |
| | | | Itaconic acid | 8.0 | 2.1% | 8.0 | 2.1% | 8.0 | 2.1% |
| | | Monomer (a3) | Divinylbenzene | 0.2 | 0.05% | | 0.00% | 0.2 | 0.05% |
| | | Monomer (a4) | Sodium p-styrenesulfonate | 2.5 | 0.6% | 2.5 | 0.6% | 2.5 | 0.6% |
| | | | Polyoxyethylene alkyl ether sulfuric ester salt | 1.7 | 0.4% | 1.7 | 0.4% | 1.7 | 0.4% |
| | Radical polymerization initiator (e) | | Potassium persulfate | 1.0 | | 1.0 | | 1.0 | |
| Amounts of components used for fabrication of binder composition (parts by mass) | | | Rongalite SFS | 0.6 | | 0.6 | | 0.6 | |
| | Basic substance (d) | | Ammonia | 17 | | 17 | | 17 | |
| | Aqueous medium (b) | | Water | 583 | | 583 | | 583 | |
| | | | ARKON M-90 | | | 10.0 | 2.59 | | |
| | | | alicyclic saturated hydrocarbon resin | | | | | | |
| | | | ARKON M-135 | | | | | | |
| | | | alicyclic saturated hydrocarbon resin | | | | | | |
| | Tackifier | | YS RESIN PX800 | | | | | | |
| | | | polyterpene resin | | | | | | |
| | | | EMULSION HARIESTER DS-70L | | | | | | |
| | | | rosin ester resin | | | | | | |
| | | | EMULSION AM-1000-NT | 10.0 | 2.58 | | | | |
| | | | alicyclic saturated hydrocarbon resin | | | | | | |
| Evaluation | Tackifier | | Softening point | 100 | | 90 | | | |
| | Binder composition | | Non-volatile matter concentration (mass%) | 40 | | 40 | | 40 | |
| | Copolymer | | Glass transition temperature (°C) | 15 | | 15 | | 15 | |
| | | | Particle diameter (d50) (µm) | 0.27 | | 0.27 | | 0.27 | |
| | Battery | | Internal resistance (DCR) (Ω) | 27 | | 27 | | 25 | |
| | | | Discharge capacity retention after 500 cycles (%) | 79 | | 81 | | 73 | |

| | | | | | | | | | |
|---|---|---|---|---|---|---|---|---|---|
| 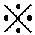 1: The numerical values in the right columns for the raw material monomers (a) are the content rates (mass%) of individual monomers in a case where the total amount of the raw material monomer (a) is set to 100 parts by mass. The numerical values in the right columns for the tackifiers are the numbers of parts by mass of the tackifiers in a case where the copolymer is set to 100 parts by mass. | | | | | | | | | |

Polyoxyethylene alkyl ether sulfuric ester salt (manufactured by DKS Co. Ltd., ACARON KH-10) as a monomer (a4) shown in Table 1 and Table 2 is a polymerizable surfactant.

Rongalite SFS as a polymerization initiator (e) is the trade name of rongalite manufactured by Sumitomo Seika Chemicals Company, Limited.

Tackifiers shown in Table 1 and Table 2 are the following tackifiers.

### Hydrogenated petroleum resins

· ARKON M-90 (alicyclic saturated hydrocarbon resin): Manufactured by Arakawa Chemical Industries, Ltd., softening point: 90°C
· ARKON M-135 (alicyclic saturated hydrocarbon resin): Manufactured by Arakawa Chemical Industries, Ltd., softening point: 135°C
· EMULSION AM-1000-NT (alicyclic saturated hydrocarbon resin): A dispersion liquid (concentration: 50 %) containing a tackifier similar to ARKON M-90 dispersed in an aqueous medium in water using a surfactant, numerical values shown in Table 2 indicate the amounts of emulsified particles containing the tackifier in the dispersion liquid. Manufactured by Arakawa Chemical Industries, Ltd., softening point: 100°C

### Rosin-based resins

· Emulsion HARIESTER DS-70L (rosin ester resin); A dispersion liquid (concentration: 50 %) containing a rosin ester resin dispersed in an aqueous medium in water using a surfactant, numerical values shown in Table 2 indicate the amounts of emulsified particles containing the tackifier in the dispersion liquid. Manufactured by Harima Chemicals Group, Inc., softening point: 70°C

### Terpene-based resin

· YS RESIN PX800 (polyterpene resin): manufactured by Yasuhara Chemical Co., Ltd., softening point: 80°C

The amounts of ammonia as a basic substance (d) shown in Table 1 and Table 2 are the amounts (parts by mass) of ammonia that was contained in the ammonia water.

The amounts of water as the aqueous media (b) shown in Table 1 and Table 2 are the total amounts (parts by mass) of water was contained in the binder compositions for a non-aqueous secondary battery.

### 2. Evaluation of copolymer and binder composition for non-aqueous secondary battery

Regarding the copolymer in the emulsion containing the emulsified particles containing the copolymer of each of Example 1 to Example 6 and Comparative Example 1 dispersed in water, the glass transition temperature (Tg) and the particle diameter (d50) were measured by methods to be described below. The results thereof are shown in Table 1 and Table 2.

In addition, regarding the binder composition for a non-aqueous secondary battery of each of Example 1 to Example 6 and Comparative Example 1, the non-volatile matter concentration was measured by a method to be described below. The results thereof are shown in Table 1 and Table 2.

### Glass transition temperature (Tg) of copolymer

A 2 mm-thick film composed of the copolymer was obtained by a method in which the emulsion containing the emulsified particles containing the copolymer dispersed in water was applied onto a release PET (polyethylene terephthalate) film and dried at 50°C for five hours.

A square test piece that was 2 mm in length and 2 mm in width was cut out from the resultant film. The test piece was sealed in an aluminum pan, and differential scanning calorimetry (DSC) measurement was performed on the test piece using a differential scanning calorimeter (EXSTAR DSC/SS7020 manufactured by Hitachi High-Tech Corporation) at a heating rate of 10 °C/minute under a nitrogen gas atmosphere. The temperature range of the DSC measurement was set to -40°C to 200°C. In addition, the peak top temperature in a DDSC chart that was obtained as the temperature differential of DSC was measured, and this temperature was regarded as the glass transition temperature Tg (°C) of the copolymer.

### Particle diameter (d50) of emulsified particles containing copolymer

The particle diameter (d50) of the emulsified particles containing the copolymer was measured by measuring the emulsion containing the emulsified particles containing the copolymer dispersed in water at room temperature by a dynamic light scattering method (DLS) using NANOTORAC WAVE II (manufactured by MicrotracBEL Corp.).

### Non-volatile matter concentration of binder composition for non-aqueous secondary battery

One gram of the binder composition for a non-aqueous secondary battery containing the copolymer, the tackifier, and water was weighed, placed on an aluminum dish having a diameter of 5 cm, and put into a dryer. The binder composition was dried at one pressure (1013 hPa) and a temperature of 105°C for one hour while the air in the dryer was circulated, and the mass of the remaining component was measured. The mass proportion (mass%) of the component remaining after the drying in the mass (1 g) of the binder composition for a non-aqueous secondary battery before the drying was calculated and regarded as the non-volatile matter concentration (mass%).

### 3. Production of non-aqueous secondary battery

A negative electrode was fabricated by a method to be described below using the binder composition for a non-aqueous secondary battery of each of Example 1 to Example 6 and Comparative Example 1, and a lithium-ion secondary battery that was a non-aqueous secondary battery of each of Example 1 to Example 6 and Comparative Example 1 was fabricated using the negative electrode.

### Production of positive electrode

94 Parts by mass of LiNi_{0.6} Mn_{0.2}Co₀.₂O₂ as a positive electrode active material, 3 parts by mass of acetylene black as a conductive aid, and 3 parts by mass of polyvinylidene fluoride as a binder were mixed together to obtain a mixture. 50 Parts by mass of N-methyl pyrrolidone was further added to the resultant mixture, thereby obtaining a positive electrode slurry.

A 15 µm-thick aluminum foil was prepared as a positive electrode current collector. The positive electrode slurry was applied to both surfaces of the positive electrode current collector by a direct roll method. The amount of the positive electrode slurry applied to the positive electrode current collector was adjusted so that the thickness after a roll pressing treatment to be described below reached 125 µm per surface.

The positive electrode slurry applied onto the positive electrode current collector was dried at 120°C for five minutes and pressed by a roll pressing method using a roll press (manufactured by Thank Metal Co., Ltd., press load: 5 t/cm, roll width: 7 cm), thereby obtaining a positive electrode sheet having positive electrode active material layers on both surfaces of the positive electrode current collector. The resultant positive electrode sheet was cut out to a rectangular shape that was 50 mm in length and 40 mm in width, and a conductive tab was attached thereto, thereby producing a positive electrode.

### Production of negative electrode (non-aqueous secondary battery electrode)

96.9 Parts by mass of artificial graphite (G49, manufactured by JiangXi ZiChen Technology Co., Ltd.) as a negative electrode active material, 3.6 parts by mass (1.4 parts by mass of the non-volatile matter) of any of the binder compositions for a non-aqueous secondary battery produced in Example 1 to Example 6 and Comparative Example 1, and 60 parts by mass of a 2 mass% aqueous solution of CMC (carboxymethyl cellulose sodium salt, manufactured by Nippon Paper Industries Co., Ltd., SUNROSE (registered trademark) MAC500LC) were mixed together, 16 parts by mass of water was further added thereto, and the components were mixed together using a planetary centrifugal mixer (ARE-310, manufactured by Thinky Corporation), thereby obtaining a negative electrode slurry (slurry for a non-aqueous secondary battery electrode).

A 10 µm-thick copper foil was prepared as a negative electrode current collector. The negative electrode slurry was applied to both surfaces of the negative electrode current collector by a direct roll method. The amount of the negative electrode slurry applied to the negative electrode current collector was adjusted so that the thickness of a negative electrode active material layer after the roll pressing treatment to be described below reached 170 µm per surface.

The negative electrode slurry applied onto the negative electrode current collector was dried at 90°C for 10 minutes and pressed by a roll pressing method using the roll press (manufactured by Thank Metal Co., Ltd., press load: 8 t/cm, roll width: 7 cm). As a result, a negative electrode sheet having negative electrode active material layers on both surfaces of the negative electrode current collector was obtained. The resultant negative electrode sheet was cut out to a rectangular shape that was 52 mm in length and 42 mm in width, and a conductive tab was attached thereto, thereby producing a negative electrode.

### Production of non-aqueous secondary battery

A separator made of a polyolefin-based porous film (made of a polyethylene, thickness: 25 µm) was interposed between the positive electrode and the negative electrode, laminated such that the positive electrode active material layer and the negative electrode active material layer faced each other, and stored in an exterior body made of an aluminum-laminated material (battery pack). After that, an electrolytic solution was injected into the exterior body, vacuum impregnation was performed, and the battery pack was packed with a vacuum heat sealer, thereby obtaining a lithium-ion secondary battery.

As the electrolytic solution, an electrolytic solution obtained by mixing 99 parts by mass of a solution containing LiPF₆ dissolved in a concentration of 1.0 mol/L in a solvent mixture of ethylene carbonate (EC), ethyl methyl carbonate (EMC), and diethyl carbonate (DEC) contained in fractions of 30:50:20 in terms of volume ratio with 1 part by mass of vinylene carbonate (VC) was used.

### 4. Evaluation of non-aqueous secondary battery

Regarding the lithium-ion secondary battery of each of Example 1 to Example 6 and Comparative Example 1, the internal resistance and the discharge capacity retention after 500 cycles were evaluated by methods to be described below. The results are shown in Table 1 and Table 2.

### Internal resistance (DCR)

The internal resistance (DCR (Ω)) of the lithium-ion secondary battery was measured by a procedure to be described below under a condition of 25°C. That is, constant-current charge was performed at 0.2C until the voltage reached 3.6 V from the rest potential, and the charged state was set to 50% of the initial capacity (SOC50%). After that, discharge was performed for 60 seconds at each current value of 0.2 C, 0.5 C, 1 C, and 2 C. The internal resistance DCR (Ω) at SOC50% was determined from a relationship between these four current values (values during one second) and the voltages.

### [Discharge capacity retention after 500 cycles]

An operation of a series of steps (i) to (iv) to be described below performed under a condition of 45°C was regarded as one cycle, and charge and discharge were performed. The time integral value of a current in the steps (i) and (ii) was defined as the charge capacity, and the time integral value of the current in the step (iv) was defined as the discharge capacity. In addition, the discharge capacity at the first cycle and the discharge capacity at the 500^{th} cycle were measured, and the discharge capacity retention after 500 cycles was calculated from the following formula. Discharge capacity retention (%) = 100 × (discharge capacity at 500th cycle/discharge capacity at first cycle)

(i) The lithium-ion secondary battery is charged at a current of 1 C until the voltage reaches 4.2 V (constant current (CC) charge).
(ii) The lithium-ion secondary battery is charged at a voltage of 4.2 V until the current reaches 0.05 C (constant voltage (CV) charge). (iii) The lithium-ion secondary battery is left to stand for 30 minutes.
(iv) The lithium-ion secondary battery is discharged at a current of 1 C until the voltage reaches 2.75 V (constant current (CC) discharge).

### 5. Evaluation results

As shown in Table 1 and Table 2, it was possible to confirm that compared with the lithium-ion secondary battery of Comparative Example 1, all of the lithium-ion secondary batteries of Example 1 to Example 6 had a high discharge capacity retention. This is assumed to be because the non-volatile matters of the binder compositions for a non-aqueous secondary battery that were contained in the negative electrodes of the lithium-ion secondary batteries of Example 1 to Example 6 contained the copolymers including the structural units derived from the monomer (a1) and the monomer (a2) shown in Table 1 and Table 2 and the tackifiers shown in Table 1 and Table 2.

In more detail, in Comparative Example 1, the negative electrode was produced using the binder composition for a non-aqueous secondary battery containing the emulsified particles containing the copolymer dispersed in water as in Example 1 but containing no tackifiers. Therefore, it is assumed that in the lithium-ion secondary battery of Comparative Example 1, the binding property between the molecules of the electrode active material and between the electrode active material and the current collector became insufficient, and a poor capacity retention was obtained.

The contents of the binder compositions for a non-aqueous secondary battery that were contained in the negative electrodes of Example 1 to Example 6 and Comparative Example 1 were slight (1.4 parts by mass of the non-volatile matters). Regardless of this fact, the cycle characteristics of the lithium-ion secondary batteries for which the binder compositions for a non-aqueous secondary battery of Example 1 to Example 6 were used were meaningfully different from those of Comparative Example 1. From this fact, it was found that the effect of the use of the binder compositions for a non-aqueous secondary battery of Example 1 to Example 6 is extremely significant.

In addition, as shown in Table 1 and Table 2, it was possible to confirm that all of the lithium-ion secondary batteries of Example 1 to Example 6 and Comparative Example 1 showed practically sufficiently low values from the viewpoint of internal resistance, which is a secondary effect.

### REFERENCE SIGNS LIST

1 Copolymer
2 Tackifier
3, 31 Emulsified particle containing copolymer 1
4, 41 Surfactant

## Claims

1. A binder composition for a non-aqueous secondary battery, comprising:
a copolymer; and
a tackifier,
wherein the copolymer has
a first structural unit derived from a monomer (a1) and
a second structural unit derived from a monomer (a2),
the monomer (a1) is a nonionic compound having only one ethylenically unsaturated bond, and
the monomer (a2) is a compound having a carboxyl group and having only one ethylenically unsaturated bond.

2. The binder composition for a non-aqueous secondary battery according to Claim 1,
wherein the tackifier is at least one selected from a group consisting of a hydrogen-added petroleum resin and a terpene-based resin.

3. The binder composition for a non-aqueous secondary battery according to Claim 2,
wherein at least one of the tackifier is the hydrogen-added petroleum resin.

4. The binder composition for a non-aqueous secondary battery according to Claim 3,
wherein the hydrogen-added petroleum resin has a softening point of 70°C to 140°C.

5. The binder composition for a non-aqueous secondary battery according to Claim 1,
wherein an amount of the tackifier is 0.10 parts by mass or more and 50 parts by mass or less relative to 100 parts by mass of the copolymer.

6. The binder composition for a non-aqueous secondary battery according to Claim 1,
wherein an amount of the second structural unit in all of the structural units of the copolymer is 0.10 mass% or more and 20 mass% or less.

7. The binder composition for a non-aqueous secondary battery according to Claim 1,
wherein the copolymer has a third structural unit derived from a monomer (a3), and
the monomer (a3) is a compound having a plurality of independent ethylenically unsaturated bonds.

8. The binder composition for a non-aqueous secondary battery according to Claim 7,
wherein an amount of the third structural unit in all of the structural units of the copolymer is 0.010 mass% or more and 10 mass% or less.

9. The binder composition for a non-aqueous secondary battery according to Claim 1,
wherein the first structural unit derived from the monomer (a1) includes a structural unit derived from an aromatic compound, and
an amount of the structural unit derived from an aromatic compound in all of the structural units of the copolymer is 36 mass% or more.

10. The binder composition for a non-aqueous secondary battery according to Claim 1, further comprising:
an aqueous medium.

11. The binder composition for a non-aqueous secondary battery according to Claim 10,
wherein the aqueous medium is one selected from a group consisting of water, a hydrophilic solvent, and a mixture containing water and a hydrophilic solvent.

12. The binder composition for a non-aqueous secondary battery according to Claim 10,
wherein the copolymer and the tackifier have been dispersed in the aqueous medium.

13. The binder composition for a non-aqueous secondary battery according to Claim 1,
wherein the copolymer has a glass transition temperature of -10°C to 40°C.

14. A slurry for a non-aqueous secondary battery electrode, comprising:
the binder composition for a non-aqueous secondary battery according to any one of Claim 1 to 13; and
an electrode active material.

15. A non-aqueous secondary battery electrode, comprising:
a non-volatile matter of the binder composition for a non-aqueous secondary battery according to any one of Claim 1 to 13.

16. A non-aqueous secondary battery, comprising:
the non-aqueous secondary battery electrode according to Claim 15.
